# EUROPÄISCHE PATENTSCHRIFT

(11) **EP 2 767 877 B1**
(45) Veröffentlichungstag und Bekanntmachung des Hinweises auf die Patenterteilung: **06.07.2016**
(21) Anmeldenummer: 14154711.7
(22) Anmeldetag: 11.02.2014
(51) Int. Cl.: G05B 19/418, G05B 19/048, H04L 12/40

(54) **Steuerungs- und Datenübertragungssystem zum Übertragen von sicherheitsbezogenen Daten über einen Feldbus**
Control and data transmission system for transmission of safety-related data via a field bus
Système de commande et de transmission de données pour la transmission de données liées à la sécurité via un bus de terrain

(30) Priorität: 13.02.2013 DE 102013101413
(43) Veröffentlichungstag der Anmeldung: 20.08.2014
(60) Teilanmeldung: 15168392.7
(73) Patentinhaber: Phoenix Contact GmbH & Co. KG, 32825 Blomberg (DE)
(72) Erfinder: Meyer-Gräfe, Karsten, 33758 Schloß Holte-Stukenbrock (DE)
(74) Vertreter: Blumbach Zinngrebe

(56) Entgegenhaltungen:
- EP-A1- 0 984 344
- EP-A1- 1 887 444
- EP-A2- 2 202 599
- EP-A2- 2 302 472
- EP-B1- 1 188 096
- WO-A1-2009/156122
- DE-A1- 19 801 137

## Beschreibung

Die vorliegende Erfindung betrifft ein Steuerungs- und Datenübertragungssystem zum Übertragen von sicherheitsbezogenen Daten über ein Kommunikationsmedium.

In der Automatisierungstechnik ist es häufig notwendig, Sicherheitsfunktionen oder sicherheitskritische Prozesse zum Schutz von Mensch, Maschine oder Umwelt zu implementieren, mit denen zum Beispiel eine Maschine nach Öffnen einer Schutztür oder Betätigung eines Not-AusSchalters abgeschaltet oder in einen sichern Zustand gefahren werden kann. Dafür werden konventionelle Sicherheitskonzepte zunehmend durch in fehlersicheren Automatisierungssystemen eingebettete Sicherheitsfunktionen ersetzt. Diese Systeme umfassen dezentral am Netzwerk eines Automatisierungs-Bussystems, d.h. an einem Feldbussystem, angeschaltete fehlersichere Teilnehmer, wobei in den Teilnehmern in der Regel sowohl die eigentlichen Sicherheitsfunktionen, als auch die Fehler erkennenden und Fehler beherrschenden Maßnahmen realisiert sein können.

In derzeitigen automatisierten Anlagen werden abhängig vom Automatisierungsgrad und von der Ausdehnung der Anlagen Kommunikationssysteme verwendet, die dezentrale Eingabe-/Ausgabe-Geräte (E/A-Geräte) und Steuerungen verbinden. Die E/A-Geräte und Steuerungen können sowohl Standardteilnehmer als auch Teilnehmer mit Sicherheitsfunktionen sein. Für den Transport von sicherheitsbezogenen Daten über gemeinsame Kommunikationssysteme ist bekannt, das Netzwerk durch sichere Netzwerkprotokolle zu unterstützen. Die Steuerung von Standardfunktionen und von Sicherheitsfunktionen kann über ein gemeinsames Netzwerk sowohl durch eine zentrale Struktur mit einer Standard- und Sicherheitssteuerung realisiert werden, als auch durch dezentrale Steuerungs- und Sicherheitslogiken, die im Netzwerk eines Kommunikations- bzw. Feldbussystems verteilt sind und unabhängig voneinander sicherheitskritische Prozesse steuern.

Aus der EP 1 887 444 A1 ist ein System zur Prozesssteuerung bekannt, bei dem wenigstens eine zu steuernde Prozesseinrichtung durch zumindestens ein Prozessmodul und zumindestens ein Sicherheitsmodul gesteuert wird, indem nicht sicherheitsrelevante Prozesssignale des Prozessmoduls und die Prozesssicherheit betreffende Sicherheitssignale des Sicherheitsmoduls logisch miteinander verknüpft werden. Um eine Schnellschaltfunktion realisieren zu können, wird ein lokales Sicherheitssignal eines lokalen Sicherheitssensors unter Umgehung dieser logischen Verknüpfung über einen Schnellschaltpfad einem Steuerausgang einer der Prozesseinrichtung zugeordneten lokalen Steuereinheit zugeführt.

Aus der DE 198 01 137 A1 ist ein Automatisierungssystem bekannt, welches eine fehlersichere Eingabeeinheit und eine fehlersichere Ausgabeeinheit aufweist. Die fehlersichere Eingabeeinheit übermittelt zu vorgegebenen Zeitpunkten ein Telegramm zur fehlersicheren Ausgabeeinheit, wobei die fehlersichere Ausgabeeinheit den kontinuierlichen Empfang des Telegramms als Indiz für eine intakte Kommunikationsbeziehung auswertet und andernfalls eine angeschlossene Peripherie in einen sicheren Zustand überführt.

Aus der EP 2 202 599 A2 ist eine Industriesteuerung für eine automatisierte Industrieanlage bekannt, wobei die Industriesteuerung einen ersten und einen zweiten Betriebsmodus einnehmen kann, wobei im ersten Betriebsmodus und im zweiten Betriebsmodus unterschiedliche Gruppen von Komponenten der Industriesteuerung mit Energie versorgt werden.

Ein Steuerungssystem zum Steuern von sicherheitskritischen Prozessen mit wenigstens einer dezentralen, von einer Standardsteuerung abgesetzten sicheren Steuerungseinrichtung ist beispielsweise aus der EP 1 188 096 B1 bekannt. Bei dem bekannten Steuerungssystem ist die dezentral angeordnete sichere Steuerungseinrichtung ausschließlich für die Steuerung des ihr zugewiesenen sicherheitskritischen Prozesses zuständig. Das bedeutet, dass sie den sicherheitskritischen Prozess unabhängig von anderen Steuerungen, insbesondere unabhängig von einer Standardsteuerung steuert.

Dieses bekannte Steuerungssystem hat den Nachteil, dass dezentrale Sicherheitsinseln, das sind dezentrale sicherheitskritische Prozesse, nicht auf einfache und schnelle Weise angesteuert werden können, wie das manche Anwendungen verlangen.

Ferner ist in den letzten Jahren ein Steuersystem unter der Bezeichnung "Safety-Bridge" auf den Markt gekommen, welches eine Dezentralisierung der Verarbeitung sicherheitsrelevanter Prozesse ermöglicht, ohne dass dazu eine explizite Sicherheitssteuerung notwendig wäre. Eine Sicherheitseingangsbaugruppe erzeugt dabei ein sicherheitsrelevantes Signal, in welchem ein Sicherheitsdatum, beispielsweise eine Statusinformation von sicheren Sensoren, an eine zentrale Steuerung übertragen wird. Die zentrale Steuerung kopiert lediglich die empfangenen sicherheitsbezogenen Daten zu einem vorbestimmten sicheren Ausgangsmodul. Das Ausgangsmodul entpackt die sicherheitsbezogenen Daten und nimmt die sicherheitsrelevante Auswertung der Daten vor. Darüber hinaus kann das sichere Ausgangsmodul seinerseits Daten über die zentrale Steuerung an andere dezentrale Teilnehmer versenden, sodass eine Kaskadierung von Sicherheitsprozessen ermöglicht wird. Neben den reinen sicheren Prozessdaten kann das bekannte Steuersystem auch redundante Daten übertragen, die zur Absicherung der Übertragung der sicherheitsbezogenen Daten dienen.

Der Erfindung liegt die Aufgabe zugrunde, ein Steuerungs- und Datenübertragungssystem zu schaffen, welches in der Lage ist, sicherheitskritische Prozesse oder Teilprozesse in einfacher und schneller Weise zu steuern. Eine weitere Aufgabe der Erfindung ist darin zu sehen, einzelne sicherheitskritische Prozesse oder mehrere sicherheitskritische Prozesse in Form von Gruppen in einem einzigen Kommunikationszyklus und über einen einzigen Befehl schnell abschalten zu können.

Ein Kerngedanke der Erfindung kann darin gesehen werden, mit Hilfe einer zentralen Einrichtung, wie zum Beispiel einer zentralen Steuerungseinrichtung einen Schnellabschaltmodus auszulösen, um eine oder mehrere Sicherheitsinseln, d. h. dezentrale sicherheitskritische Prozesse oder Teilprozesse abschalten zu können.

Die oben genannte technische Aufgabe kann durch die Merkmale des Anspruchs 1 gelöst werden.

Die Erfindung wird nachfolgend anhand mehrerer Ausführungsbeispiels in Verbindung mit den beiliegenden Zeichnungen näher erläutert. Es zeigen:
- Fig. 1: ein beispielhaftes Automatisierungssystem,
- Fig. 2: einen beispielhaften Summenrahmen,
- Fig. 3: ein beispielhaftes Automatisierungssystem, in welchem die Erfindung verwirklicht ist, und
- Fig. 4a: ein Datentelegramm gemäß der Erfindung und
- Fig. 4b: einen beispielhaften Summenrahmen gemäß der Erfindung.

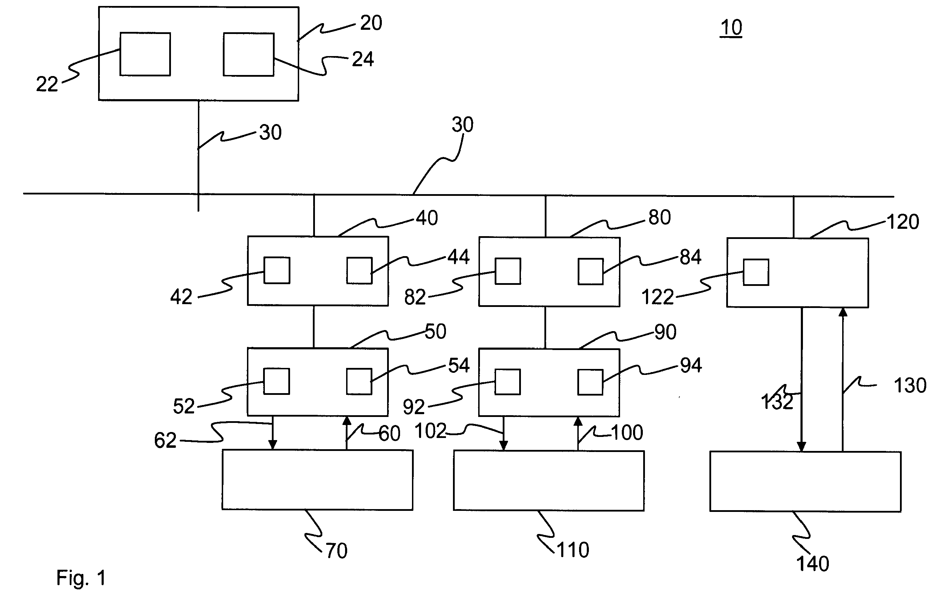

Fig. 1 zeigt ein beispielhaftes Automatisierungssystem in Form eines Steuerungs- und Datenübertragungssystems 10, welches unter Anderem zum Steuern von sicherheitskritischen Prozessen und zum Steuern sicherheitsunkritischer Prozesse ausgebildet ist. Hierbei handelt es sich um eine Ausführungsform, welche für das Verständnis der Erfindung hilfreich ist. Das Automatisierungssystem 10 wird beispielhaft anhand des Interbus-Systems erläutert, wobei auch andere Feldbussysteme eingesetzt werden können. Der Interbus ist hinlänglich bekannt und zum Beispiel in dem Fachbuch A. Baginski et al. INTERBUS Grundlagen und Praxis, 2. bearbeitete Auflage, Hüthig Verlag Heidelberg, 1998 ausführlich beschrieben.

Wie in Fig. 1 gezeigt, ist eine überlagerte Steuereinrichtung 20 beispielsweise zusammen mit einer ersten sicheren Steuereinrichtung 40, einer sicheren Signaleinheit 50, einer zweiten sicheren Steuereinrichtung 80, einer weiteren sicheren Signaleinheit 90 und einem nicht sicheren Busteilnehmer 120 an einen Interbus-basierten Feldbus 30 angeschlossen. Die sichere Steuereinrichtung 40 kann dazu ausgebildet sein, über die Signaleinheit 50 einen sicherheitskritischen Prozess 70 zu überwachen und zu steuern. Die sichere Steuereinrichtung 80 kann dazu ausgebildet sein, über die Signaleinheit 90 einen sicherheitskritischen Prozess 110 zu überwachen und zu steuern. Denkbar ist, dass mehr als zwei sichere Steuereinrichtungen, die jeweils mit mehreren Signaleinheiten verbunden sein können, am Feldbus 30 angeschlossen sind, um sicherheitskritische Prozesse in dezentraler Weise zu steuern.

Die überlagerte Steuereinrichtung 20 kann einen herkömmlichen standardisierten Busmaster 22 aufweisen, der im vorliegenden Beispiel als Interbus-Busmaster ausgebildet ist und die Kommunikation auf dem Feldbus 30 in an sich bekannter Weise steuert. Die überlagerte Steuereinrichtung 20 ist ferner dazu ausgebildet, über den nicht sicheren Busteilnehmer 120 zentral einen nicht sicheren Prozess 140 zu steuern. Der nicht sichere Busteilnehmer 120 ist vörzugesweise ein E/A-Gerät, welches über E/A-Kanäle 130 und 132 mit dem sicherheitsunkritischen Prozess 140 kommunizieren kann. In der Praxis kann das E/A-Gerät 120 über den Kanal 132 mit einem Aktor (nicht dargestellt) und über den Kanal 130 mit einem Sensor (nicht dargestellt) verbunden sein. Der Sensor liefert Zustandsdaten des sicherheitsunkritischen Prozesses 140 über das E/A-Gerät 120 an die überlagerte Steuereinrichtung 20, während das E/A-Gerät 120 die von der überlagerten Steuereinrichtung 20 kommenden Steuerdaten dem Aktor zuführt.

Weiterhin weist die überlagerte Steuereinrichtung 20 eine sicherheitsgerichtete Einrichtung 24 auf, die besondere sicherheitsbezogene Daten, vorzugsweise Schnellabschaltinformationen, von den sicheren Steuereinrichtungen 40 und 80 und/oder von den Signaleinheiten 50 und 90 empfangen, auswerten und, wenn erforderlich, gezielt verändern kann. Die genaue Funktionsweise der sicherheitsgerichteten Einrichtung 24 wird später noch ausführlich beschrieben.

Die erste sichere Steuereinrichtung 40 ist über eine Busschnittstelle 42 an den Feldbus 30 angeschlossen. Die Busschnittstelle 42 kann eine herkömmliche Interbusbasierte Busschnittstelle sein. Weiterhin weist die erste Steuerungseinrichtung 40 eine sicherheitsbezogene Einrichtung 44 auf, die dazu ausgebildet ist, mit einer sicherheitsbezogenen Einrichtung 54 der Signaleinheit 50 in an sich bekannter Weise eine fehlersichere Kommunikation zu gewährleisten. Die Signaleinheit 50 weist wiederum eine Busschnittstelle 52 auf, über welche die Signaleinheit 50 mit der ersten Steuereinrichtung 40, der übergelagerten Steuereinrichtung 20 und den übrigen Busteilnehmern kommunizieren kann.

Die erste Steuerungseinrichtung 40 kann dazu ausgebildet sein, über den Feldbus 30 erste sicherheitsbezogene Daten für die Signaleinheit 50 bereitzustellen, um den sicherheitskritischen Prozess 70 zu steuern. Die sichere Steuerungseinrichtung 40 ist vorzugsweise ferner in der Lage zweite sicherheitsbezogene Daten, das sind die besonderen sicherheitsbezogenen Daten, bereitzustellen und zur überlagerten Steuerungseinrichtung 20 zu übertragen, um eine zentrale Steuerung, insbesondere eine Schnellabschaltung des sicherheitskritischen Prozesses 70 zu ermöglichen.

Der sicherheitskritische Prozess 70 ist über E/A-Kanäle 60 und 62 mit einem sicheren Eingang und einem sicheren Ausgang der Signaleinheit 50 verbunden. In der Praxis kann die Signaleinheit 50 über den Kanal 62 mit einem Aktor (nicht dargestellt) und über den Kanal 60 mit einem Sensor (nicht dargestellt) verbunden sein. Der Sensor liefert Zustandsdaten des sicherheitsunkritischen Prozesses 70 über die Signaleinheit 50 an die überlagerte Steuereinrichtung 20 und/oder zur ersten sicheren Steuereinrichtung 40, während die Signaleinheit 50 die von der überlagerten Steuereinrichtung 20 kommenden besonderen sicherheitsbezogenen Daten und/oder die von der ersten Steuerungseinrichtung 40 bereitgestellten sicherheitsbezogenen Daten dem Aktor zuführen kann.

Die Signaleinheit 50 kann auch mehrere sichere Eingänge und Ausgänge aufweisen, die über E/A-Kanäle mit dem sicherheitskritischen Prozess 70 verbunden sind.

Angemerkt sei an dieser Stelle, dass die erste Steuereinrichtung 40, die Signaleinheit 50 und der sicherheitskritische Prozess 70 auch als Sicherheitsinsel bezeichnet werden können.

Die zweite sichere Steuereinrichtung 80 ist über eine Busschnittstelle 82 an den Feldbus 30 angeschlossen. Die Busschnittstelle 82 kann eine herkömmliche Interbusbasierte Busschnittstelle sein. Weiterhin weist die zweite Steuerungseinrichtung 80 eine sicherheitsbezogene Einrichtung 84 auf, die dazu ausgebildet ist, mit einer sicherheitsbezogenen Einrichtung 94 der Signaleinheit 90 in an sich bekannter Weise eine fehlersichere Kommunikation zu gewährleisten. Die Signaleinheit 90 weist wiederum eine Busschnittstelle 92 auf, über welche die Signaleinheit 90 mit der zweiten Steuereinrichtung 80, der übergelagerten Steuereinrichtung 20 und den übrigen Busteilnehmern kommunizieren kann.

Die zweite Steuerungseinrichtung 80 kann dazu ausgebildet sein, über den Feldbus 30 erste sicherheitsbezogene Daten für die Signaleinheit 90 bereitzustellen, um den sicherheitskritischen Prozess 110 zu steuern. Die sichere Steuerungseinrichtung 80 ist vorzugsweise ferner in der Lage, zweite sicherheitsbezogene Daten, das sind die besonderen sicherheitsbezogenen Daten, bereitzustellen und zur überlagerten Steuerungseinrichtung 20 zu übertragen, um eine zentrale Steuerung, insbesondere eine Schnellabschaltung des sicherheitskritischen Prozesses 110 zu ermöglichen.

Der sicherheitskritische Prozess 110 ist über E/A-Kanäle 100 und 102 mit einem sicheren Eingang und einem sicheren Ausgang der Signaleinheit 90 verbunden. In der Praxis kann die Signaleinheit 90 über den Kanal 102 mit einem Aktor (nicht dargestellt) und über den Kanal 100 mit einem Sensor (nicht dargestellt) verbunden sein. Der Sensor liefert Zustandsdaten des sicherheitsunkritischen Prozesses 110 über die Signaleinheit 90 zur überlagerten Steuereinrichtung 20 und/oder zur ersten sicheren Steuereinrichtung 80, während die Signaleinheit 90 die von der überlagerten Steuereinrichtung 20 kommenden besonderen sicherheitsbezogenen Daten und/oder die von der ersten Steuerungseinrichtung 80 bereitgestellten sicherheitsbezogenen Daten dem Aktor zuführen kann.

Die Signaleinheit 90 kann auch mehrere sichere Eingänge und Ausgänge aufweisen, die über E/A-Kanäle mit dem sicherheitskritischen Prozess 110 verbunden sind.

Angemerkt sei an dieser Stelle, dass die zweite Steuereinrichtung 80, die Signaleinheit 90 und der sicherheitskritische Prozess 11 auch als Sicherheitsinsel bezeichnet werden können.

Um sicherzustellen, dass die zweiten sicherheitsbezogenen Daten auch wirklich von der überlagerten Steuereinrichtung 20 kommen und korrekt weitergeleitet worden sind, kann die überlagerte Steuereinrichtung 20, d.h. vorzugsweise die sicherheitsbezogene Einrichtung 24 dazu ausgebildet sein, dynamische Daten zu erzeugen und diese zu den sicheren Steuereinrichtungen 40 und 80 und/oder direkt zu den Signaleinheiten 50 und 90 zu übertragen. Die sicheren Steuerungseinrichtungen 40 und 80 und/oder die Signaleinheiten 50 und 90 sind dann entsprechend ausgebildet, um zu erkennen, ob die dynamischen Daten definitionsgemäß erzeugt worden sind. Wenn nicht, veranlassen die Signaleinheiten 50 und 90, dass der sicherheitskritische Prozess 70 bzw. der sicherheitskritische Prozess 110 in einen sicheren Zustand geht. Denkbar ist auch, dass die Signaleinheiten 50 und 90 oder die sicheren Steuereinrichtungen 40 und 80 dynamische Daten erzeugen, diese zur überlagerten Steuereinrichtung 20 übertragen und anschließend die von der überlagerten Steuereinrichtung 20 geänderten dynamischen Daten auswerten und unter Ansprechen auf die geänderten dynamischen Daten definierte Schritte auslösen.

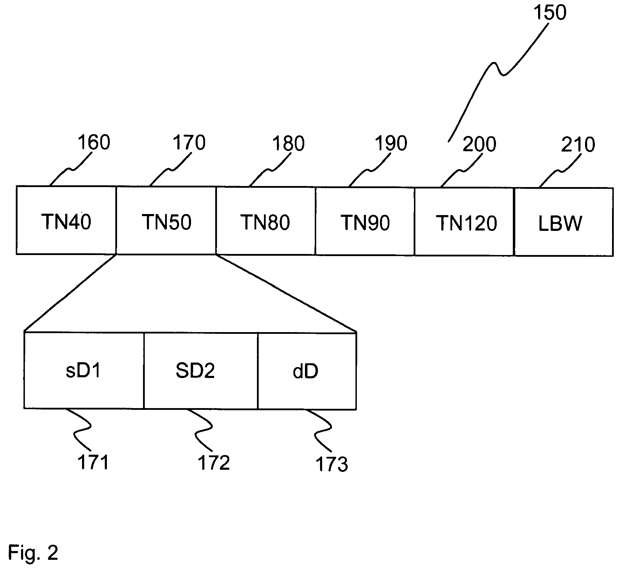

Nachfolgend wird die Funktionsweise des in Fig. 1 gezeigten Steuerungssystems 10 in Verbindung mit Fig. 2 näher erläutert.

Da es sich bei dem beispielhaften Feldbus 30, wie eingangs erwähnt, um den ringförmigen Interbus handelt, sind der Busmaster 22 und die Busschnittstellen 42, 52, 82, 92 und 122 dazu ausgebildet, eine bidirektionale Datenübertragung von Eingangs- und Ausgangsdaten aller Teilnehmer über sogenannte Summenrahmen zu ermöglichen. Ein beispielhafter Summenrahmen 150 mit einer erfindungsgemäßen Erweiterung ist in Fig. 2 dargestellt.

Gemäß dem Interbus-Kommunikationsprotokoll beginnt jeder vom Busmaster 22 auf den Feldbus 30 gelegte Summenrahmen mit einem Datenfeld 210, in welches ein Loopbackword LBW eingeschrieben ist. Dem Loopbackword folgen weitere Datenfelder 200 bis 160, die den am Feldbus 30 angeschlossenen Busteilnehmern entsprechend ihrer jeweiligen physikalischen Lage im Feldbus 30 eindeutig zugeordnet sind. Beim gezeigten Automatisierungssystem 10 ist das Datenfeld 200 dem Busteilnehmer 120, das Datenfeld 190 der Signaleinheit 90, das Datenfeld 180 der sicheren Steuerungseinrichtung 80, das Datenfeld 170 der Signaleinheit 50 und das Datenfeld 160 der sicheren Steuereinrichtung 40 zugeordnet.

Bei einer bevorzugten Ausführungsform, sind die den Signaleinheiten 50 und 90 zugeordneten Datenfelder 170 bzw. 190 jeweils in drei Teilfelder unterteilt. Lediglich das in drei Teilfelder 171, 172 und 173 unterteilte Datenfeld 170 ist in Fig. 2 detailliert dargestellt. Die sicherheitsgerichtete Einrichtung 44 der sicheren Steuereinrichtung 40 kann in das Teilfeld 171 erste sicherheitsbezogene Daten und in das Teilfeld 172 zweite sicherheitsbezogene Daten, die für die überlagerte Steuereinrichtung 20 bestimmt sind, einschreiben. In das Teilfeld 173 kann die sicherheitsgerichtete Einrichtung 44 der Steuereinrichtung 40 oder die sicherheitsgerichtete Einrichtung 54 der Signaleinheit 50 dynamische Daten einschreiben, die zur Auswertung und Verarbeitung ebenfalls an die überlagerte Steuereinrichtung 20 übertragen werden können.

In ähnlicher Weise kann die sicherheitsgerichtete Einrichtung 84 der zweiten Steuereinrichtung 80 in ein erstes Teilfeld des Datenfeldes 190 erste sicherheitsbezogene Daten und in ein zweites Teilfeld des Datenfeldes 190 zweite sicherheitsbezogene Daten, die für die überlagerte Steuereinrichtung 20 bestimmt sind, einschreiben. In ein drittes Teilfeld des Datenfeldes 190 kann die sicherheitsgerichtete Einrichtung 84 der Steuereinrichtung 80 oder die sicherheitsgerichtete Einrichtung 94 der Signaleinheit 90 dynamische Daten einschreiben, die zur Auswertung und Verarbeitung ebenfalls an die überlagerte Steuereinrichtung 20 übertragen werden können.

Die in den zweiten Teilfeldern der Datenfelder 170 und 190 übertragbaren besonderen sicherheitsbezogenen Daten enthalten vorzugsweise ein einziges Informationsbit, das gemäß einer vorteilhaften Implementierung von der sicheren Steuerungseinrichtung 40 bzw. 80 oder der Signaleinheit 50 bzw.90 auf Null gesetzt werden kann.

Angenommen sei nunmehr, dass das Automatisierungssystem 20 ordnungsgemäß arbeitet und keine Fehler aufgetreten sind.

Demzufolge müssen die sicheren Steuereinrichtungen 40 und 80 keine Sicherheitsfunktionen über die Signaleinheiten 50 bzw. 90 auslösen. Die sicherheitsbezogene Einrichtung 44 der ersten Steuereinrichtung 40 schreibt in diesem Fall eine Null in das für die Signaleinheit 50 bestimmte Teilfeld 172 und als dynamisches Datum zum Beispiel eine vorbestimmte Zahl in das Teilfeld 173, während die sicherheitsbezogene Einrichtung 84 der sicheren Steuereinrichtung 80 eine Null in das zweite Teilfeld des für die Signaleinheit 90 bestimmten Datenfeldes 190 und ebenfalls eine vorbestimmte Zahl in das dritte Teilfeld des Datenfeldes 190 schreibt.

In an sich bekannter Weise können zudem alle am Feldbus 30 angeschlossenen Teilnehmer Ausgangsdaten von anderen Teilnehmern empfangen und Eingangsdaten in die ihnen zugeordneten Datenfelder schreiben und zur überlagerten Steuereinrichtung 20 oder an andere am Feldbus 30 angeschlossene Teilnehmer übertragen. Die überlagerte Steuereinrichtung 20 bzw. deren sicherheitsbezogene Einrichtung 24 ist dazu ausgebildet, die zweiten und dritten Datenfelder der Datenfelder 170 und 190 auszuwerten, gezielt, d.h. insbesondere in definierter Weise zu verändern und mit dem nächsten Summenrahmen zu den Signaleinheiten 50 und 90 zu übertragen. Je nach Implementierung ersetzt die sicherheitsbezogene Einrichtung 24 der überlagerten Steuereinrichtung 20 beispielsweise die in den zweiten Teilfeldern der Datenfelder 170 und 190 übertragene Null durch eine Eins, während die in den dritten Teilfeldern der Datenfelder 170 und 190 übertragene vorbestimmte Zahl zum Beispiel um den Wert 1 inkrementiert wird.

Die sicherheitsbezogenen Einrichtungen 54 und 94 der jeweiligen Signaleinheiten lesen die ihnen zugeordneten zweiten und dritten Teilfelder der Datenfelder 170 bzw. 190 aus und erkennen anhand der im dritten Teilfeld enthaltenen veränderten Zahl, dass die im jeweiligen zweiten Teilfeld enthaltenen zweiten sicherheitsbezogenen Daten von der überlagerten Steuereinrichtung 20 kommen und korrekt übermittelt wurden. Unter Ansprechen auf die im jeweiligen zweiten Teilfeld enthaltene Eins erkennt die Signaleinheit 50 bzw. 90, dass die sicherheitskritischen Prozesse 70 und 110 weiterlaufen sollen.

Nunmehr sei angenommen, dass der überlagerten Steuereinrichtung 20 vom Automatisierungssystem 10 oder einer Bedienperson mitgeteilt worden ist, dass die sicherheitskritischen Prozesse 70 und 110 sofort abgeschaltet werden müssen. In diesem Fall sorgt die sicherheitsbezogene Einrichtung 24 dafür, dass in die zweiten Teilfelder der Datenfelder 170 und 190 des nächsten Summenrahmens jeweils eine Null geschrieben wird und die im dritten Teilfeld enthaltenen dynamischen Daten in vorbestimmter Weise geändert werden.

Die sicherheitsbezogenen Einrichtungen 54 und 94 der Signaleinheiten 50 bzw. 90 lesen die ihnen zugeordneten zweiten und dritten Teilfelder der Datenfelder 170 bzw. 190 aus und erkennen anhand der im dritten Teilfeld enthaltenen veränderten Zahl, dass die im jeweiligen zweiten Teilfeld enthaltenen besonderen sicherheitsbezogenen Daten von der überlagerten Steuereinrichtung 20 kommen und korrekt übermittelt wurden. Unter Ansprechen auf die im jeweiligen zweiten Teilfeld enthaltene Null erkennt die Signaleinheit 50 bzw. 90, dass die sicherheitskritischen Prozesse 70 und 110 sofort abgeschaltet werden müssen. Deshalb werden die entsprechenden sicheren Ausgänge der Signaleinheiten 50 und 90 darauf hin sofort auf Null gesetzt und die sicherheitskritischen Prozesse 70 und 110 abgeschaltet. Auf diese Weise werden die dezentralen sicherheitskritischen Prozesse 70 und 110 zentral überwacht und gesteuert. Das bedeutet, dass die überlagerte Steuereinrichtung 20 immer ein Auge auf die sicheren Steuereinrichtungen 40 und 80 wirft. Die sicheren Steuereinrichtungen 40 und 80 können deshalb nicht mehr unabhängig von der überlagerten Steuereinrichtung 20 in die sicherheitskritischen Prozesse eingreifen.

Denkbar ist, dass die sicherheitsbezogene Einrichtung 24 der überlagerten Steuereinrichtung 20 dynamische Daten erzeugt und in den jeweils dritten Teilfeldern der Datenfelder 170 und 190 einschreibt, die für die erste Steuereinrichtung 40 und zweite Steuereinrichtung 80 bestimmt sind.

An dieser Stelle sei angemerkt, dass die überlagerte Steuereinrichtung 20 dazu ausgebildet sein kann, in jedem Kommunikationszyklus die in den zweiten Teilfelder der Datenfelder 170 und 190 übertragenen zweiten sicherheitsbezogenen Daten gezielt zu verändern, um zu verhindern, dass eine unerwünschte Schnellabschaltung der sicherheitskritischen Prozesse 70 und 110 erfolgt.

Denkbar ist, dass Informationsquellen, das sind beispielsweise die sicheren Steuerungseinrichtungen 40 und 80 und/oder die Signaleinheiten 50 und 90 in einen Quasi-Sicherheitszustand gehen, in welchem sie den sicherheitskritischen Prozesse 70 bzw. den sicherheitskritischen Prozesse 110 laufen lassen. Die sicherheitskritischen Prozesse 70 und 110 senden dann ihrerseits an die sichere Steuereinrichtung 40 bzw. 80 eine Information, dass eine Schnellabschaltung angefordert wurde. Die sicheren Steuereinrichtung 40 und 80 oder die jeweiligen Signaleinheiten 50 und 90 müssen dann die ihnen zugeordneten Informationen, die die Schnellabschaltinformation enthält, in dem zweiten Teilfeld des Datenfeldes 170 bzw. 180 zurücksetzen. Der Quasi-Sicherheitszustand kann solange aufrecht erhalten werden, bis eine eingestellte maximale Reaktionszeit auf den Steuerungseinrichtungen 40 und 80 oder den Signaleinheiten 50 und 90 abgelaufen ist. In diesem Fall wechselt die Steuereinrichtung 40 bzw. 80 von dem Quasi-Sicherheitszustand in den Sicherheitszustand.

Auf diese Weise ist eine schnelle Abschaltung einzelner sicherer Komponenten oder Gruppen von sicheren Komponenten möglich, ohne dass eine aufwendige Programmierung auf den dezentralen Steuereinrichtungen 40 und 80 vorgesehen werden muss.

Anstelle von Schnellabschaltinformationen, die in die zweiten Teilfelder der Datenfelder 170 und 190 eines jeden Summenrahmen eingeschrieben werden, könnte von der überlagerten Steuerung 20 auch zyklisch eine zentrale Broadcast-Information abgesetzt werden, die die Schnellabschaltinformation enthält. Die sicheren Steuereinrichtungen 40 und 80 und/oder die Signaleinheiten 50 und 90 werten diese Informationen dann aus.

Die sicheren Steuereinrichtungen 40 und 80 und/oder die Signaleinheiten 50 und 90 können ferner dazu ausgebildet sein, eine ausgelöste Schnellabschaltung im nächsten Summenrahmen zu bestätigen, was zu einer weiteren Erhöhung der Sicherheit führen kann.

Ein Aspekt der Erfindung kann darin gesehen werden, dass eine Informationsquelle, beispielsweise eine sichere Signaleinheit neben ersten sicherheitsbezogenen Daten auch zweite sicherheitsbezogene Daten zur Schnellabschaltung einzelner sicherheitsrelevanter Inseln zufügt. Die zweiten sicherheitsbezogenen Daten gelangen zu einer überlagerten Steuerung, die diese Daten auswertet und gezielt ändert. Vorzugsweise enthalten die zweiten sicherheitsbezogenen Daten ein Informationsbit, welches standardgemäß von der Signaleinheit auf Null gesetzt wird. In der überlagerten Steuerungseinrichtung wird das empfangene Informationsbit auf Eins gesetzt und dann zu einem bestimmten sicheren Ausgang, der auch als Informationssenke bezeichnet werden kann, übertragen. Die Informationssenke wertet in an sich bekannter Weise die ersten sicherheitsbezogenen Daten aus.

Zusätzlich überprüft sie die zugeordneten zweiten sicherheitsbezogenen Informationen und setzt gegebenenfalls alle oder einzelne sichere Ausgänge auf Null, sodass der jeweilige sicherheitskritische Prozesse mittels einer zentralen Steuerung in einen sicheren Zustand geführt werden kann.

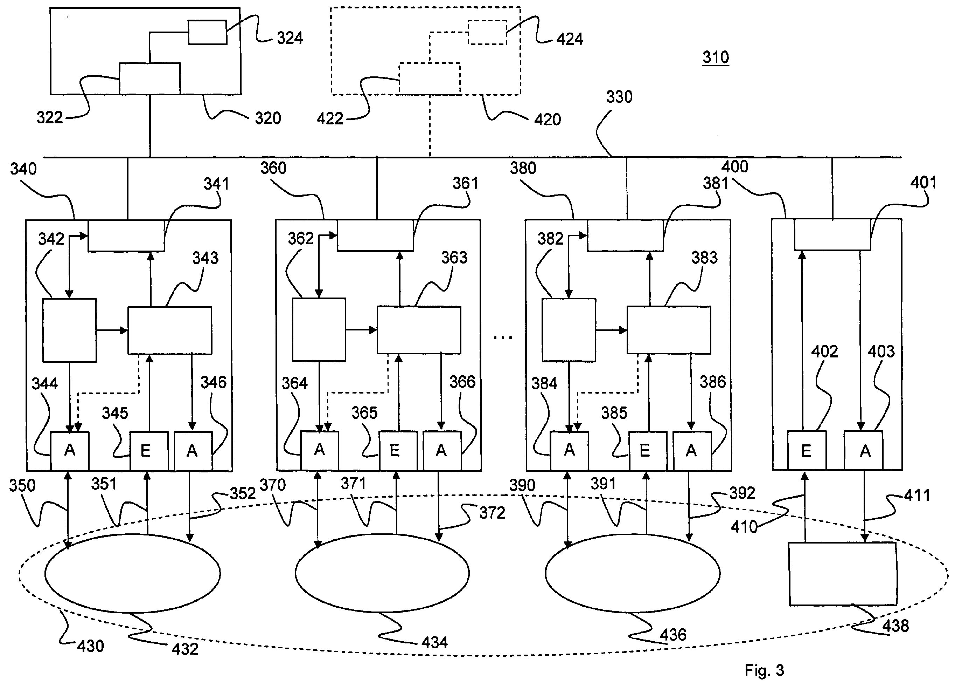

Fig. 3 zeigt als Steuerungs- und Datenübertragungssystem 310 ein beispielhaftes Automatisierungssystem, welches unter Anderem zum Steuern von sicherheitskritischen Prozessen 432, 434 und 436, gegebenenfalls von wenigstens einem nicht sicherheitskritischen Prozess 438 und zum Übertragen von sicherheitsbezogenen Daten über ein Kommunikationsmedium 330 ausgebildet ist. Das Steuerungs- und Datenübertragungssystem 310 weist mehrere sichere Signaleinheiten auf, wobei in Fig. 3 beispielhaft drei sichere Signaleinheiten 340, 360, 380 dargestellt sind. Die sicheren Signaleinheit 340, 360 und 380 sind jeweils über wenigstens einen Ausgang und/oder wenigstens einen Eingang mit einem sicherheitskritischen Prozess verbunden sind. Bei dem sicherheitskritischen Prozess kann es sich auch um sicherheitskritische Teilprozesse oder Sicherheitsinseln handeln, die jeweils einem der sicheren Signaleinheiten 340, 360 und 380 zugeordnet sind. Jede sichere Signaleinheit kann beispielsweise einen Eingang und zwei Ausgänge, über die sie beispielsweise mit einem sicherheitskritischen Teilprozess verbunden ist, aufweisen.

Die sicheren Signaleinheiten 340, 360 und 380 sind an das Kommunikationsmedium 330 angeschaltet. Zudem ist wenigstens eine zentrale Einrichtung 320 und/oder 420 an das Kommunikationsmedium 330 angeschlossen. Die sicheren Signaleinheiten 340, 360, 380 weisen jeweils eine Sicherheitseinrichtung 343, 363 bzw. 383 auf und sind jeweils dazu ausgebildet, sicherheitsbezogene Daten bereitzustellen und diese Daten über das Kommunikationsmedium 330 zu übertragen. Jede sichere Signaleinheit 340, 360, 380 ist dazu ausgebildet, ein definiertes, voreingestelltes Signal, vorzugsweise ein Einbit-Wort, bereitzustellen. Das definierte Signal kann eine logische Null sein. Hierzu kann in jeder sicheren Signaleinheit eine Steuer- und Auswerteeinrichtung 342, 362 bzw. 382 implementiert sein. Sowohl das definierte Signal als auch die sicherheitsbezogenen Daten werden zur zentralen Einrichtung 320 und/oder 420 übertragen. Die zentrale Einrichtung 320 und/oder 420 ist dazu ausgebildet, nur das definierte Signal auszuwerten und in Abhängigkeit von dem ausgewerteten definierten Signal einen zentralen Steuerbefehl zu erzeugen und den zentralen Steuerbefehl zusammen mit den sicherheitsbezogenen Daten zu wenigstens einer vorbestimmten sicheren Signaleinheit der mehreren sicheren Signaleinheiten 340, 360, 380 zu übertragen. Der zentrale Steuerbefehl ist vorzugsweise ebenfalls ein Einbit-Wort. Wenigstens die eine vorbestimmte sichere Signaleinheit ist dazu ausgebildet ist, die sicherheitsbezogenen Daten und den zentralen Steuerbefehl auszuwerten, um wenigstens einen Teil des sicherheitskritischen Prozesses zu steuern.

Die Auswertung des zentralen Steuerbefehls kann in der jeweiligen Steuer- und Auswerteeinrichtung 342, 362 und/oder 382 erfolgen, während sicherheitsbezogene Daten in der jeweiligen Sicherheitseinrichtung 343, 363 und/oder 383 in an sich bekannter Weise ausgewertet werden können.

Dank der Verwendung eines definierten Signals, welches vorzugsweise in jedem Kommunikationszyklus zur zentralen Einrichtung übertragen und dort ausgewertet sowie in vorbestimmter Weise verändert wird, kann eine zentrale und sichere Steuerung durchgeführt werden, sodass dezentrale, sicherheitskritischen Prozesse, die gemäß dem EP 1 188 096 B1 nur unabhängig und dezentral voneinander gesteuert werden können, nunmehr auch zentral gesteuert werden können.

Bei den sicheren Signaleinheiten kann es sich um ein Eingabe- und/oder Ausgabegeräte, auch als E/A- oder I/O-Busteilnehmer bekannt, handeln. Eine solche sichere Signaleinheit ist beispielsweise in der Lage, Eingangsdaten von Sensoren eines sicherheitskritischen Prozesses zu empfangen, in einer Sicherheitseinrichtung in an sich bekannter Weise in sicherheitsbezogene Daten umzusetzen und die sicherheitsbezogenen Daten an die zentrale Einrichtung weiterzuleiten, sowie Ausgangssignale an Aktoren zu übertragen, die den sicherheitskritischen Prozess steuern. Die sicheren Signaleinheiten können, müssen aber nicht gleich oder ähnlich aufgebaut sein. So können sie sich zum Beispiel in der Anzahl der Eingänge und Ausgänge unterscheiden.

Angemerkt sei, dass die sicherheitsbezogenen Daten von einer sicheren Signaleinheit dazu verwendet werden, den sicherheitskritischen Prozess unabhängig von der zentralen Einrichtung zu steuern. Die zentrale Einrichtung kann eine überlagerte Steuereinrichtung in Form eines Busmasters oder einer Anschaltbaugruppe sein. Die zentrale Einrichtung kann auch als Überwachungseinrichtung implementiert sein.

Im Folgenden werden unter sicherheitsbezogenen Daten vorzugsweise Daten verstanden, die sowohl die Eingangsdaten zum Beispiel eines Sensors als auch sicherheitsrelevante Daten, wie zum Beispiel eine Prüfsumme enthalten, die eine fehlersichere Übertragung der Eingangsdaten ermöglichen.

Als Kommunikationsmedium kann ein Feldbus, wie zum Beispiel der Interbus, CAN-Bus oder Profibus, oder ein Ethernet basiertes System zum Einsatz kommen.

Der Interbus ist hinlänglich bekannt und zum Beispiel in dem Fachbuch A. Baginski et al. INTERBUS Grundlagen und Praxis, 2. bearbeitete Auflage, Hüthig Verlag Heidelberg, 1998 ausführlich beschrieben.

Wie in Fig. 3 beispielhaft gezeigt, sind die zentrale Einrichtung 320 über eine Kommunikationsschnittstelle 322 und zusätzlich oder alternativ eine zentrale Einrichtung 420 über eine Kommunikationsschnittstelle 422 an das Kommunikationsmedium 330 angeschlossen. Die zentrale Einrichtung 320 kann eine überlagerte Steuereinrichtung sein, während die zentrale Einrichtung 420 eine Überwachungseinrichtung sein kann.

An das Kommunikationsmedium 330 sind die sicheren Signaleinheiten 340, 360 und 380 sowie beispielsweise eine nicht sichere Signaleinheit 400 angeschlossen. Die Signaleinheiten können als Busteilnehmer bezeichnet werden. Lediglich der einfacheren Darstellung wegen sind lediglich drei sichere Signaleinheiten und eine nicht sichere Signaleinheit 400 dargestellt.

Die sicheren Signaleinheiten 340, 360 und 380 sind beispielsweise jeweils einem sicherheitskritischen Teilprozess 432, 434 bzw. 436 zugeordnet sein, während die nicht sichere Signaleinheit 400 einem nicht sicherheitskritischen Teilprozess 438 zugeordnet sein kann. Bei dem in Fig. 3 gezeigten Ausführungsbeispiel bilden die Teilprozesse 432, 434, 436 und 438 einen Gesamtprozess 430. Denkbar ist auch, dass jede sichere Signaleinheit und jede nicht sichere Signaleinheit mit einem sicherheitskritischen bzw. nicht sicherheitskritischen Prozess verbunden sind, die nicht voneinander abhängig sind.

Die überlagerte Steuereinrichtung 320 kann einen herkömmlichen standardisierten Busmaster 324 aufweisen, der als Interbus-Busmaster ausgebildet sein kann und die Kommunikation auf dem Kommunikationsmedium 330 in an sich bekannter Weise steuern kann. Die überlagerte Steuereinrichtung 320 ist ferner dazu ausgebildet, über die nicht sichere Signaleinheit 400 zentral den sicherheitsunkritischen Prozess 438 zu steuern.

Die sichere Signaleinheit 340 weist beispielsweise einen Ausgang oder Ausgangsmodul 344 auf, der über einen Ausgangskanal 350 mit dem sicherheitskritischen Prozess 432 verbunden ist. Beispielsweise ist an den Ausgang 344 ein Schütz (nicht gezeigt) angeschlossen, über den der sicherheitskritische Prozess 432, beispielsweise eine Maschine für einen Biegeprozess, an eine Energieversorgung (nicht dargestellt) angeschlossen werden kann. Der Ausgang 344 ist mit einer Steuer- und Auswerteeinrichtung 342 verbunden, die wiederum mit einer Kommunikationsschnittstelle 341 verbunden ist. Die Steuer- und Auswerteeinrichtung 342 kann dazu ausgebildet sein, ein definiertes, voreingestelltes Signal, vorzugsweise eine logische Null, zu erzeugen und dieses Signal zur zentralen Einrichtung 320 oder 420 zu übertragen. Sinn und Zweck des definierten Signals wird weiter unten erläutert. Über die Kommunikationsschnittstelle 341 ist die sichere Signaleinheit 340 an das Kommunikationsmedium 330 angeschaltet, um mit der zentralen Einrichtung 320, der zentralen Einrichtung 420 und/oder den übrigen Signaleinheiten kommunizieren zu können. Die Signaleinheit 340 weist ferner eine Sicherheitseinrichtung 343 auf, die mit einem Eingang 345 und einem Ausgang 346 verbunden ist. Der Eingang 345 und der Ausgang 346 können auch als Sicherheitseingangsbaugruppe bzw. Sicherheitsausgangsbaugruppe bezeichnet werden. Der Eingang 345 kann über einen Eingangskanal 351 mit einem Sensor, zum Beispiel einem Not-Ausschalter (nicht dargestellt) innerhalb des sicherheitskritischen Prozesses 432 verbunden sein. Der Ausgang 346 kann über einen Ausgangskanal 352 mit einem Aktor (nicht dargestellt) verbunden sein, mit dessen Hilfe der sicherheitskritische Teilprozess in einen sicheren Zustand gefahren werden kann. Beispielsweise wird eine Maschine nur im Leerlauf betrieben. Weiterhin ist die Sicherheitseinrichtung 343 mit der Kommunikationsschnittstelle 341 und der Steuer- und Auswerteeinrichtung 342 verbunden. Je nach Implementierung der Signaleinheit 340 kann die Sicherheitseinrichtung 343 auch mit dem Ausgang 344 verbunden sein. Die Funktionsweise der Sicherheitseinrichtung 343 ist an sich bekannt. Sie kann aus am Eingang 345 empfangenen Eingangsdaten sicherheitsbezogene Daten erzeugen, indem zum Beispiel eine Prüfsumme den Eingangsdaten hinzugefügt wird. Die Sicherheitseinrichtung 343 gewährleistet somit in an sich bekannter Weise eine fehlersichere Kommunikation über das Kommunikationsmedium 330. Angemerkt sei, dass die sicherheitsbezogenen Daten ohne Manipulation durch die zentrale Einrichtung 320 oder 420 über das Kommunikationsmedium übertragen werden.

Zudem kann die Sicherheitseinrichtung 343 über das Kommunikationsmedium 330 empfange sicherheitsbezogene Daten auswerten und entsprechende Ausgangssignale erzeugen und diese gezielt einem Ausgang, zum Beispiel dem Ausgang 346 zuführen, um eine Sicherheitsfunktion zu starten. Denkbar ist, dass die Sicherheitseinrichtung 343 zumindest teilweise in dem Eingang 345 und/oder dem Ausgang 346 implementiert ist.

Die sichere Signaleinheit 360 weist beispielsweise einen Ausgang oder Ausgangsmodul 364 auf, der über einen Ausgangskanal 370 mit dem sicherheitskritischen Prozess 434 verbunden ist. Beispielsweise ist an den Ausgang 364 ein Schütz (nicht gezeigt) angeschlossen, über den der sicherheitskritische Prozess 434, beispielsweise eine Maschine für einen Bohrprozess, an eine Energieversorgung (nicht dargestellt) angeschlossen werden kann. Der Ausgang 364 ist mit einer Steuer- und Auswerteeinrichtung 362 verbunden, die wiederum mit einer Kommunikationsschnittstelle 361 verbunden ist. Die Steuer- und Auswerteeinrichtung 362 kann dazu ausgebildet sein, ein definiertes, voreingestelltes Signal, vorzugsweise eine logische Null, zu erzeugen und dieses Signal zur zentralen Einrichtung 320 oder 420 zu übertragen. Sinn und Zweck des definierten Signals wird weiter unten erläutert. Über die Kommunikationsschnittstelle 361 ist die sichere Signaleinheit 340 an das Kommunikationsmedium 330 angeschaltet, um mit der zentralen Einrichtung 320, der zentralen Einrichtung 420 und/oder den übrigen Signaleinheiten kommunizieren zu können. Die Signaleinheit 360 weist ferner eine Sicherheitseinrichtung 363 auf, die mit einem Eingang 365 und einem Ausgang 366 verbunden ist. Der Eingang 345 kann über einen Eingangskanal 371 mit einem Sensor, zum Beispiel einem Schutzgitter (nicht dargestellt) innerhalb des sicherheitskritischen Prozesses 434 verbunden sein. Der Ausgang 366 kann über einen Ausgangskanal 372 mit einem Aktor (nicht dargestellt) verbunden sein, mit dessen Hilfe der sicherheitskritische Teilprozess 434 in einen sicheren Zustand gefahren werden kann. Beispielsweise wird eine Maschine nur im Leerlauf betrieben. Weiterhin ist die Sicherheitseinrichtung 363 mit der Kommunikationsschnittstelle 361 und der Steuer- und Auswerteeinrichtung 362 verbunden. Je nach Implementierung der Signaleinheit 360 kann die Sicherheitseinrichtung 363 auch mit dem Ausgang 364 verbunden sein. Die Funktionsweise der Sicherheitseinrichtung 363 ist an sich bekannt. Sie kann aus am Eingang 365 empfangenen Eingangsdaten sicherheitsbezogene Daten erzeugen, indem zum Beispiel eine Prüfsumme den Eingangsdaten hinzugefügt wird. Die Sicherheitseinrichtung 363 gewährleistet somit in an sich bekannter Weise eine fehlersichere Kommunikation über das Kommunikationsmedium 330. Angemerkt sei, dass die sicherheitsbezogenen Daten ohne Manipulation durch die zentrale Einrichtung 320 oder 420 über das Kommunikationsmedium übertragen werden. Zudem kann die Sicherheitseinrichtung 364 über das Kommunikationsmedium 330 empfange sicherheitsbezogene Daten auswerten und entsprechende Ausgangssignale erzeugen und diese gezielt einem Ausgang, zum Beispiel dem Ausgang 366 zuführen, um eine Sicherheitsfunktion zu starten. Denkbar ist, dass die Sicherheitseinrichtung 363 zumindest teilweise in dem Eingang 365 und/oder dem Ausgang 366 implementiert ist.

Die sichere Signaleinheit 380 weist beispielsweise einen Ausgang oder Ausgangsmodul 384 auf, der über einen Ausgangskanal 390 mit dem sicherheitskritischen Prozess 436 verbunden ist. Beispielsweise ist an den Ausgang 384 ein Schütz (nicht gezeigt) angeschlossen, über den der sicherheitskritische Prozess 436, beispielsweise eine Maschine für einen Biegeprozess, an eine Energieversorgung (nicht dargestellt) angeschlossen werden kann. Denkbar ist auch, dass beispielsweise der Ausgang 384 mit einem Zentralschalter (nicht dargestellt) verbunden ist, mit dessen Hilfe der Gesamtprozess 430 abgeschaltet, das heißt von der Energieversorgung getrennt werden kann. Der Ausgang 384 ist mit einer Steuer- und Auswerteeinrichtung 382 verbunden, die wiederum mit einer Kommunikationsschnittstelle 381 verbunden ist. Die Steuer- und Auswerteeinrichtung 382 kann dazu ausgebildet sein, ein definiertes, voreingestelltes Signal, vorzugsweise eine logische Null, zu erzeugen und dieses Signal zur zentralen Einrichtung 320 oder 420 zu übertragen. Sinn und Zweck des definierten Signals wird weiter unten erläutert. Über die Kommunikationsschnittstelle 381 ist die sichere Signaleinheit 380 an das Kommunikationsmedium 330 angeschaltet, um mit der zentralen Einrichtung 320, der zentralen Einrichtung 420 und/oder den übrigen Signaleinheiten kommunizieren zu können. Die Signaleinheit 380 weist ferner eine Sicherheitseinrichtung 383 auf, die mit einem Eingang 385 und einem Ausgang 386 verbunden ist. Der Eingang 385 kann über einen Eingangskanal 391 mit einem Sensor, zum Beispiel einem Schutzgitter, Temperatursensor oder Drehzahlmesser (nicht dargestellt) innerhalb des sicherheitskritischen Prozesses 436 verbunden sein. Der Ausgang 386 kann über einen Ausgangskanal 352 mit einem Aktor (nicht dargestellt) verbunden sein, mit dessen Hilfe der sicherheitskritische Teilprozess 436 in einen sicheren Zustand gefahren werden kann. Beispielsweise wird eine Maschine nur im Leerlauf betrieben. Weiterhin ist die Sicherheitseinrichtung 383 mit der Kommunikationsschnittstelle 381 und der Steuer- und Auswerteeinrichtung 382 verbunden. Je nach Implementierung der Signaleinheit 380 kann die Sicherheitseinrichtung 383 auch mit dem Ausgang 384 verbunden sein. Die Funktionsweise der Sicherheitseinrichtung 383 ist an sich bekannt. Sie kann aus am Eingang 385 empfangenen Eingangsdaten sicherheitsbezogene Daten erzeugen, indem zum Beispiel eine Prüfsumme den Eingangsdaten hinzugefügt wird. Die Sicherheitseinrichtung 383 gewährleistet somit in an sich bekannter Weise eine fehlersichere Kommunikation über das Kommunikationsmedium 330. Angemerkt sei, dass die sicherheitsbezogenen Daten ohne Manipulation durch die zentrale Einrichtung 320 oder 420 über das Kommunikationsmedium übertragen werden. Zudem kann die Sicherheitseinrichtung 383 über das Kommunikationsmedium 330 empfange sicherheitsbezogene Daten auswerten und entsprechende Ausgangssignale erzeugen und diese gezielt einem Ausgang, zum Beispiel dem Ausgang 386 zuführen, um eine Sicherheitsfunktion zu starten. Denkbar ist, dass die Sicherheitseinrichtung 383 zumindest teilweise in dem Eingang 385 und/oder dem Ausgang 386 implementiert ist.

Angemerkt sei an dieser Stelle, dass jede der Sicherheitseinrichtungen 343, 363 und 383 vorzugsweise dazu ausgebildet ist, die an die entsprechende sichere Signaleinheit 30, 360 bzw. 380 übertragenen sicherheitsbezogenen Daten nicht auszuwerten und nicht zu verarbeiten, wenn die jeweilige sichere Signaleinheit einen Abschaltbefehl von der zentralen Einrichtung 320 oder 420 empfangen hat. In diesem Fall wird der dazugehörende sicherheitskritische Prozess nur unter Ansprechen auf den Abschaltbefehl abgeschaltet.

Die nicht sichere Signaleinheit 400 weist zum Beispiel einen Eingang 402 auf, an den über einen Eingangskanal 410 ein Sensor (nicht dargestellt) des nicht sicherheitskritischen Prozesses 438 angeschaltet sein kann. An einen Ausgang 403 kann über einen Ausgangskanal 411 ein Aktor (nicht dargestellt) des nicht sicherheitskritischen Prozesses angeschlossen sein. Über eine Kommunikationsschnittstelle 401 ist die nicht sichere Signaleinheit 400 an das Kommunikationsmedium 330 angeschlossen.

Angemerkt sei an dieser Stelle, dass die sichere Signaleinheit 340 und der sicherheitskritische Prozess 432 auch als Sicherheitsinsel bezeichnet werden können. In ähnlicher Weise können auch die Signaleinheit 360 und der sicherheitskritische Prozess 434 sowie die Signaleinheit 380 und der sicherheitskritische Prozess 436 jeweils eine weitere Sicherheitsinsel bilden.

Ferner sei angemerkt, dass die Kommunikationsschnittstellen 322, 422, 341, 361, 381 und 401 in Abhängigkeit vom eingesetzten Kommunikationsmedium 330 zum Beispiel die Funktion von herkömmlichen Interbus-basierten Busschnittstellen oder von Ethernet basierten Kommunikationsschnittstellen ausführen können.

Damit die sicheren Signaleinheiten 340, 360 und 380 prüfen können, ob der von der zentralen Einrichtung 320 oder 420 kommende zentrale Steuerbefehl auch wirklich von der jeweiligen zentralen Einrichtung kommt und korrekt übertragen worden ist, kann die zentrale Einrichtung 320 oder 420 dazu ausgebildet sein, dynamische Daten in definierter Weise zu erzeugen und diese zu den sicheren Signaleinheiten 340, 360 und 380 zu übertragen. Die sicheren Signaleinheiten sind dazu ausgebildet, zu erkennen, ob die dynamischen Daten definitionsgemäß erzeugt worden sind. Wenn nicht, sorgen die sicheren Signaleinheiten dafür, dass der jeweilige sicherheitskritische Prozess 432, 434 und/oder 436 in einen sicheren Zustand geht. Denkbar ist auch, dass die sicheren Signaleinheiten 340, 360, 380 in definierter Weise dynamische Daten erzeugen, diese zur zentralen Einrichtung 320 oder 420 übertragen und anschließend die von der zentralen Einrichtung 320 oder 420 in definierter Weise geänderten dynamischen Daten auswerten und unter Ansprechen auf die geänderten dynamischen Daten definierte Schritte auslösen.

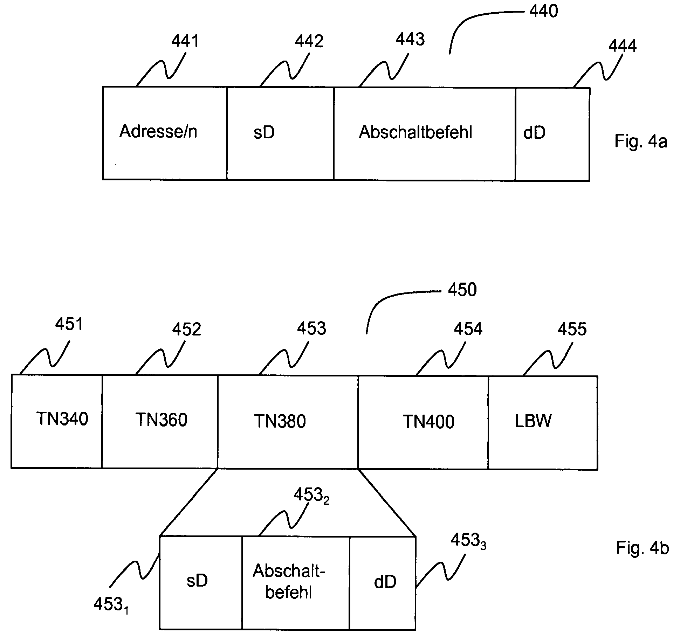

Nachfolgend wird die Funktionsweise des in Fig. 3 gezeigten Steuerungssystems 10 zunächst in Verbindung mit Fig. 4b näher erläutert.

Angenommen sei deshalb, dass es sich bei dem Kommunikationsmedium 330 beispielsweise um einen ringförmigen Interbus handelt, der Busmaster 324 und die Kommunikationsschnittstellen 341, 361, 381 und 401 dazu ausgebildet, eine bidirektionale Datenübertragung von Eingangs- und/oder Ausgangsdaten aller Signaleinheiten über sogenannte Summenrahmen zu ermöglichen. Ein beispielhafter Summenrahmen 450 mit einer erfindungsgemäßen Modifikation ist in Fig. 4b dargestellt.

Gemäß dem Interbus-Kommunikationsprotokoll beginnt jeder vom Busmaster 324 auf den Feldbus 330 gelegte Summenrahmen mit einem Datenfeld 455, in welches ein Loopback-Wort LBW eingeschrieben ist. Dem Loopback-Wort folgen weitere Datenfelder 454 bis 451, die den am Feldbus 330 angeschlossenen Signaleinheiten 340, 360, 380 und 400 entsprechend der jeweiligen physikalischen Lagen im Feldbus 330 eindeutig zugeordnet sind. Im vorliegenden Beispiel ist das Datenfeld 454 der nicht-sicheren Signaleinheit 400, das Datenfeld 453 der sicheren Signaleinheit 380, das Datenfeld 452 der sicheren Signaleinheit 360 und das Datenfeld 451 der sichern Signaleinheit 451 zugeordnet.

Bei einer bevorzugten Ausführungsform sind die den sicheren Signaleinheiten 340, 360 und 380 zugeordneten Datenfelder 451, 452 und 453 jeweils in drei Teilfelder unterteilt. Lediglich die Teilfelder des Datenfeldes 453 sind in Fig. 4b detailliert dargestellt. Sicherheitsbezogene Daten sD stehen im Teilfeld 453₁, der zentrale Steuerbefehl im Teilfeld 453₂ und gegebenenfalls dynamische Daten im Teilfeld 453₃. Dynamische Daten werden verwendet, um der jeweiligen sicheren Signaleinheit die Möglichkeit zu geben, zu prüfen, ob empfangene sicherheitsbezogene Daten korrekt von der überlagerten Steuereinrichtung 320 übertragen worden sind. Wird der Summenrahmen zur überlagerten Steuereinrichtung 320 übertragen, steht im Teilfeld 453₂ das von der sicheren Signaleinheit 380 erzeugte definierte Signal, vorzugsweise ein Einbit-Wort in Form einer logischen Null. Die Sicherheitsbezogen Daten im Teilfeld 453₁ können in an sich bekannter Weise neben Eingangsdaten auch eine Prüfsumme enthalten.

Nunmehr wird ein erstes Szenario betrachtet, bei dem angenommen sei, dass alle am Feldbus angeschlossenen Signaleinheiten und die zentrale Einrichtung 320 fehlerfrei arbeiten und im Gesamtprozess 430 keine Störungen aufgetreten sind.

Solange in dem Steuerungs- und Datenübertragungssystem 320 kein Fehler aufgetreten ist, oder keine Sicherheitsfunktion, wie zum Beispiel das Betätigen eines Not-Ausschalters oder das Öffnen einer Schutztür, ausgelöst worden ist, darf es auch nicht zu einer Abschaltung bzw. Schnellabschaltung der sicherheitsgerichteten Prozesse kommen. Um dies sicherzustellen, kann vorgesehen sein, dass die sicheren Signaleinheiten 340, 360 und 380 als definiertes Signal eine logische Null zur überlagerten Steuereinrichtung 320 übertragen, welche dann aktiv die logische Null durch eine logische Eins ersetzt, wenn kein Fehler aufgetreten oder kein sicherheitskritischer Prozess ausgelöst worden ist. In diesem Fall greift die überlagerte Steuereinrichtung 320 in Übereinstimmung mit dem Ruhestromprinzip zwingend in die Steuerung der sicherheitskritischen Prozesse 432, 434 und 436 ein.

Bei dem zugrundeliegenden Szenario schreibt daher jede sichere Signaleinheit in das erste Teilfeld des ihr zugeordneten Datenfeldes sicherheitsbezogene Daten, die jedoch keine Sicherheitsfunktion auslösen. Zudem schreibt jede sichere Signaleinheit in das zweite Teilfeld das voreingestellte Signal, zum Beispiel eine logische Null.

Dieser Vorgang wird im Folgenden lediglich hinsichtlich der sicheren Signaleinheit 380 detaillierter beschrieben.

Die von einem dem sicherheitskritischen Prozess 434 zugeordneten Sensor, beispielsweise von einem Schutzgitter, am Eingang 386 empfangen Zustandsdaten werden der Sicherheitseinrichtung 363 zugeführt und können in an sich bekannter Weise in sicherheitsbezogene Daten umgewandelt werden. Die Sensordaten signalisieren im gegebenen Beispiel ein geschlossenes Schutzgitter. Da die Signaleinrichtung 380 fehlerfrei arbeitet, erzeugt die Steuer- und Auswerteinrichtung 362 eine logische Null. Je nach Implementierung können die sicherheitsbezogenen Daten und die logische Null als definiertes Signal zum Beispiel von der Steuer- und Auswerteeinrichtung 382 oder der Kommunikationsschnittstelle 381 in das Teilfeld 453₁ und 453₂ geschrieben werden. Angemerkt sei, dass auch die nicht sichere Signaleinheit 400 die über den Eingang 402 empfangenen Sensordaten aus dem nicht sicherheitskritischen Prozess in das Datenfeld 454 schreibt. Nachdem der Summenrahmen alle Signaleinheiten durchlaufen hat, wird er zur zentralen Einrichtung 320 übertragen. Die zentrale Einrichtung 320 und vorzugsweise der Busmaster 324 sind dazu ausgebildet, lediglich das zweite Teilfeld der Datenfelder 451, 452 und 453, welches das jeweilige definierte Signal enthält, auszulesen und auszuwerten. Da angenommen wurde, dass die zentrale Einrichtung 320 fehlerfrei arbeitet, wird die logische Null, welche gemäß einer vorteilhaften Implementierung als Abschaltsignal von den sicheren Signaleinheiten interpretiert wird, in jedem zweiten Teilfeld durch eine logische Eins überschrieben. Diese Aufgabe kann der Busmaster 320 ausführen. Anstelle des Busmasters 324 könnte eine separate Einrichtung vorgesehen sein, welche die zweiten Teilfelder auswertet und überschreibt. Eine logische 1 verhindert, dass die sicheren Signaleinheiten 340, 360 und 380 den Gesamtprozess oder zugeordnete Teilprozesse abschalten. Zusätzlich kann die zentrale Einrichtung 320 in das dritte Teilfeld der Datenfelder 451 bis 453 dynamische Daten schreiben, die zum Beispiel in jedem Kommunikationszyklus um den Wert 1 erhöht werden.

Die überlagerte Steuereinrichtung 320 überträgt nunmehr den in Fig. 4b gezeigten Summenrahmen über den Feldbus 330 zu den Signaleinheiten. Die Auswertung eines Datenfeldes wird wiederum hinsichtlich der sicheren Signaleinheit 380 erläutert. Gemäß einer vorteilhaften Implementierung der sicheren Signaleinheit 380 übergibt die Kommunikationsschnittstelle 381 das Datenfeld 453 der Steuer- und Auswerteeinrichtung 382. Die Steuer- und Auswerteeinrichtung 382 erkennt im Teilfeld 453₂ eine logische Eins. Unter Ansprechen auf die logische Eins liefert die Steuer- und Auswerteeinrichtung 382 kein Abschaltsignal an den Ausgang 384 und übergibt die sicherheitsbezogenen Daten an die Sicherheitseinrichtung 383. Die Sicherheitseinrichtung erkennt, dass keine Störung oder Gefährdung vorliegt, und liefert dementsprechend kein Ausgangssignal an den Ausgang 386. Auch alle übrigen Signaleinheiten erkennen einen störungsfreien Betrieb und der Gesamtprozess läuft weiter.

Gemäß einem zweiten Szenario sei angenommen, dass die Steuer- und Auswerteeinrichtung 382 der sicheren Signaleinheit 380 fehlerhaft ist und deshalb in das Teilfeld 453₂ anstelle des voreingestellten definierten Signals, im vorliegenden Beispiel ist das eine logische Null, eine logische Eins schreibt. Alle übrigen Signaleinheiten und der Gesamtprozess 430 laufen fehlerfrei. Im nächsten Kommunikationszyklus empfängt die zentrale Einrichtung 320 nunmehr den entsprechenden Summenrahmen. Die zentrale Einrichtung 320, welche wiederum nur die zweiten Teilfelder auswertet, erkennt im Teilfeld 453₂ eine logische Eins. In Abhängigkeit der Systemkonfiguration kann die zentrale Einrichtung 320 dafür sorgen, dass wenigstens zu einer vorbestimmten sichern Signaleinheit ein zentraler Abschaltbefehl übertragen wird. Im vorliegenden Fall schreibt die zentrale Einrichtung 320 in das zweite Teilfeld der Datenfelder 451 bis 453, welche den sicheren Signaleinheiten 340, 360 und 380 zugeordnet sind, jeweils eine logische Null. Zudem schreibt sie in das Datenfeld 454 Ausgangsdaten, welche ebenfalls einen Abschaltbefehl enthalten. Anschließend sendet die zentrale Einrichtung 320 den Summenrahmen zu den Signaleinheiten. Die Steuer- und Auswerteeinrichtungen 342, 362 und 382 der Signaleinheiten 340, 360 bzw. 380 erzeugen jeweils unter Ansprechen auf die empfangene logische Null ein Abschaltsignal, welches über den Ausgang 344, 364 bzw. 384 ausgegeben wird. Die Abschaltsignale steuern vorzugsweise Schütze an, die den jeweiligen sicherheitskritischen Prozess, also die Prozesse 432, 434 und 436 sofort abschalten, und zwar unabhängig davon, welche Information die sicherheitsbezogenen Daten der ersten Teilfelder enthalten. Deshalb kann die im zweiten Teilfeld übertragene logische Null auch als zentraler Schnellabschaltbefehl bezeichnet werden.

Vorzugsweise sind die Steuer- und Auswerteinrichtungen 342, 362 und 382 dazu ausgebildet, bei Empfang einer logischen Null die jeweilige Sicherheitseinrichtung 343, 363 bzw. 383 zu veranlassen, die im ersten Teilfeld empfangenen sicherheitsbezogenen Daten weder auszuwerten noch zu verarbeiten.

Die nicht sichere Signaleinheit 400 leitet die im Datenfeld 454 empfangenen Ausgangsdaten über den Ausgang 411 zum Beispiel an einen Schütz weiter, der unter Ansprechen auf die Ausgangsdaten den nicht sicherheitskritischen Teilprozess 438 abschaltet. Auf diese Weise wird auch der Teilprozess 438 und somit der Gesamtprozess 430 abgeschaltet.

An dieser Stelle sei angemerkt, dass das von jeder sicheren Signaleinheit lieferbare definierte Signal auch ein sicherheitsbezogenes Signal sein kann, welches in der jeweiligen Sicherheitseinrichtung 343, 363 bzw. 383 erzeugt und ausgewertet werden kann. Die gestrichelten Linien zwischen den Sicherheitseinrichtungen 343, 363 und 383 und den Ausgängen 344, 364 bzw. 384 deuten an, dass ein sicherheitsbezogenes definiertes Signal, welches wie das nicht sicherheitsbezogene definierte Signal im jeweiligen zweiten Teilfeld übertragen werden kann, von der jeweiligen Sicherheitseinrichtung ausgewertet und dann als Schnellabschaltbefehl über den jeweiligen Ausgang ausgegeben werden kann.

Gemäß einem dritten Szenario sei angenommen, dass lediglich die zentrale Einrichtung 320 fehlerhaft ist und die zweiten Teilfelder nicht mit einer logischen Eins überschreibt. Alle Signaleinheiten und der Gesamtprozess 430 laufen fehlerfrei.

In einem Kommunikationszyklus empfängt die zentrale Einrichtung 320 nunmehr den entsprechenden Summenrahmen und wertet wiederum nur die zweiten Teilfelder aus. Allerdings überschreibt sie, da fehlerhaft, die zweiten Teilfelder nicht, so dass zu jeder sicheren Signaleinheit im zweiten Teilfeld eine logische Null übertragen wird. Die Steuer- und Auswerteeinrichtung 342, 362 und 382 der Signaleinheiten 340, 360 bzw. 380 erzeugen demzufolge jeweils unter Ansprechen auf die empfangene logische Null ein Abschaltsignal, welches über den Ausgang 344, 364 bzw. 384 ausgegeben wird. Die Abschaltsignale steuern vorzugsweise Schütze an, die den jeweiligen sicherheitskritischen Prozess, also die Prozesse 432, 4334 und 436 sofort abschalten.

An diesem Systemverhalten erkennt man, dass eine im zweiten Teilfeld übertragene logische Null, welche einen Schnellabschaltbefehl darstellt, von den sicheren Signaleinheiten gegenüber den sicherheitsbezogenen Daten, welche jeweils im ersten Teilfeld der Datenfelder 451, 452 und 453 übertragen werden, bevorzugt ausgeführt werden.

Vorteilhafterweise sei nunmehr angenommen, dass die zentrale Einrichtung 320 oder 420 dazu ausgebildet ist, unter Ansprechen auf ein vorbestimmtes Ereignis die von den sicheren Signaleinheiten 340, 360, 380 empfangenen definierten Signale, im fehlerfreien Fall vorzugsweise eine logische Null, nicht zu verändern. Ein solches vorbestimmtes Ereignis kann zum Beispiel von einer Bedienperson oder dem Steuer- und Datenübertragungssystem 310 ausgelöst werden. Angenommen sei, dass die zentrale Einrichtung 320 von einer Bedienperson mitgeteilt bekam, dass der Gesamtprozess 430 sofort abgeschaltet werden muss.

Demzufolge sorgt die zentrale Einrichtung 320 dafür, dass jedes zweite Teilfeld eine logische Null enthält. Ferner schreibt sie in das Datenfeld 454 einen Abschaltbefehl für die nicht sichere Signaleinheit 400 und überträgt den Summenrahmen zu den Signaleinheiten.

Wie zuvor bereits beschrieben, erzeugen die Steuer- und Auswerteeinrichtungen 342, 362 und 382 unter Ansprechen auf eine empfangene logische Null jeweils ein Abschaltsignal, welches über den Ausgang 344, 364 bzw. 384 den dazugehörenden sicherheitskritischen Teilprozess 432, 434 bzw. 436 abschaltet. Auch die nicht sichere Signaleinheit 400 gibt über ihren Ausgang 403 einen Abschaltbefehl zum Abschalten des nicht sicherheitskritischen Teilprozesses 438 aus. Auf diese Weise kann der Gesamtprozess 430 zentral von der zentralen Einrichtung 320 ohne Verwendung der sicherheitsbezogenen Daten sofort abgeschaltet werden.

Dies kann dadurch erreicht werden, dass, wie oben bereits erläutert, die Steuer- und Auswerteinrichtungen 342, 362 und 382 vorzugsweise dazu ausgebildet sind, bei Empfang einer logischen Null die jeweilige Sicherheitseinrichtung 343, 363 bzw. 383 zu veranlassen, die empfangenen sicherheitsbezogenen Daten weder auszuwerten noch zu verarbeiten.

Wie bereits erwähnt, kann vorgesehen sein, dass die zentrale Einrichtung 320 dazu ausgebildet ist, dynamische Daten, wie zum Beispiel fortlaufende, die Kommunikationszyklen zählende Nummern, zu erzeugen und diese jeweils in den dritten Teilfeldern der Datenfelder 451, 452 und 453 zu den sicheren Signaleinheiten 340, 360 und 380 zu übertragen. Die sicheren Signaleinheiten 340, 360 und 380 können dann anhand der im dritten Teilfeld empfangenen dynamischen Daten erkennen, ob die im zweiten Teilfeld empfangenen zweiten sicherheitsbezogenen Daten von der überlagerten Steuereinrichtung 320 kommen und korrekt weitergeleitet worden sind.

Angenommen sei nunmehr, dass anstelle eines Interbus basierten Summenrahmens einzelne Telegramme zwischen der zentralen Einrichtung 320 und den Signaleinheiten über das Kommunikationsmedium 330, welches beispielsweise ein Ethernet basiertes Kommunikationssystem ist, übertragen werden. Die Kommunikationsschnittstellen 322, 341, 361, 381 und 401 sind entsprechend ausgebildet und können ein in Fig. 4a nur schematisch dargestelltes Telegramm senden und empfangen.

Das in Fig. 4a gezeigte Telegramm enthält ein Adressfeld 441, in welchem Ziel- und/oder Ursprungsadressen und/oder Broadcast- bzw. Gruppenadressen stehen können. In einem Datenfeld 442 können sicherheitsbezogene Daten von und zu den jeweiligen Sicherheitseinrichtungen 343, 363 und 383 übertragen werden. Ein Datenfeld 443 dient dazu, die von einer sicheren Signaleinheit erzeugten definierten Signale zu übertragen. Zudem kann ein Datenfeld 444 vorgesehen sein, in welchem, wie zuvor beschrieben, dynamische Daten übertragen werden können.

Nunmehr sei angenommen, dass die sichere Signaleinheit 380 über den Eingang 385 empfangene Daten, welche zum Beispiel die Drehzahl einer Maschine des sicherheitskritischen Teilprozesses 436 enthalten, über die zentrale Einrichtung 320 zur sicheren Signaleinheit 340 übertragen möchte. Die Sicherheitseinrichtung 383 erzeugt aus den über den Eingang 385 empfangenen Daten in an sich bekannter Weise sicherheitsbezogene Daten und übergibt diese Daten der Kommunikationsschnittstelle 381. Im vorliegenden Beispiel sei angenommen, dass die Steuer- und Auswerteeinrichtung 382 fehlerhaft arbeitet und deshalb eine logische Eins anstelle der voreingestellten Null zur Kommunikationseinrichtung 381 überträgt. Je nach Implementierung kann die Kommunikationseinrichtung 381 die Adresse der zentralen Einrichtung 320, die Adresse der sichern Signaleinheit 380 und die Zieladresse der sicheren Signaleinrichtung 360 in das Adressenfeld 441 schreiben. Zudem schreibt sie die sicherheitsbezogenen Daten in das Datenfeld 442 und eine logische Eins in das Datenfeld 443 und überträgt das Datentelegramm zur zentralen Einrichtung 320. Die zentrale Einrichtung 320 ist wiederum dazu ausgebildet, das Datenfeld 443, aber nicht das Datenfeld 442 ausuzwerten. Sie erkennt, dass anstelle einer logischen Null eine logische Eins von der sicheren Signaleinheit 380 übertragen worden ist. In Abhängigkeit der Systemkonfiguration weiß die zentrale Einrichtung 320 zum Beispiel, dass bei Erhalt einer logischen Eins von der sicheren Signaleinheit 380 alle sicherheitskritischen Prozesse 432, 434 und 436 abgeschaltet werden müssen. Demzufolge kann die zentrale Einrichtung 320 dazu ausgebildet sein, ein einziges Datentelegramm zu erzeugen, in welchem eine Broadcast- oder Gruppenadresse in das Datenfeld 441 geschrieben wird, welche die sicheren Signaleinheiten 340, 360 und 380 adressiert. Im Datenfeld 442 stehen unverändert die sicherheitsbezogenen Daten, während in das Datenfeld 443 eine logische Null als zentraler Abschaltbefehl geschrieben wird. In das Datenfeld 444 kann eine fortlaufende Nummer geschrieben werden. Das Datentelegramm wird nunmehr über das Kommunikationsmedium 330 an die sicheren Signaleinheiten 340, 360 und 380 übertragen. Die Steuer- und Auswerteeinrichtungen 342, 362 und 382 werten das Datenfeld 443 des empfangenen Datentelegramms aus und erzeugen jeweils unter Ansprechen auf die logische Null ein Abschaltsignal für die Ausgänge 344, 364 und 384. Die Abschaltsignale bewirken, dass die sicherheitskritischen Prozesse 432, 434 und 436 sofort abgeschaltet werden. Empfangene sicherheitsbezogene Daten werden in den jeweiligen sicheren Signaleinheiten 340, 360 und 380 nicht ausgewertet und nicht verarbeitet. Demzufolge kann die logische Null auch als Schnellabschaltbefehl interpretiert werden.

Angemerkt sei, dass bei einem fehlerfreien Betrieb der sicheren Signaleinheiten und der zentralen Einrichtung 320 die zentrale Einrichtung 320 jede logische Null im Datenfeld 443 eines empfangenen Datentelegramms durch eine logische Eins ersetzt und zu den sicheren Signaleinheiten 340, 360 und 380 überträgt. Das bedeutet, dass die Steuer- und Auswerteeinrichtungen 342, 362 und 382 kein Abschaltsignal erzeugen und die sicherheitsbezogenen Daten an die jeweiligen Sicherheitseinrichtungen 343, 363 bzw. 383 weiterleiten. Die Sicherheitseinrichtungen werten die von der zentralen Einrichtung unverändert weitergeleiteten sicherheitsbezogenen Daten dann in an sich bekannter Weise aus und stellen am Ausgang 346, 366 bzw. 386 entsprechende Steuersignale zur Ausführung von Sicherheitsfunktionen bereit.

Denkbar ist, dass zum Beispiel der Ausgang 344 der sicheren Signaleinheit 340 mit einem Schütz verbunden ist, mit dessen Hilfe der Gesamtprozess 430 abgeschaltet werden kann. In diesem Fall kann die zentrale Einrichtung 320 dazu ausgebildet sein, ein Datentelegramm, in dessen Datenfeld 443 eine logische Null geschrieben wird, gezielt nur zur sichern Signaleinheit 340 zu übertragen. Die Steuer- und Auswerteeinrichtung 342 liefert dann ein Abschaltsignal an den Ausgang 344, welches eine Schnellabschaltung des Gesamtprozesses 430 bewirkt.

Verallgemeinernd gesprochen illustriert Fig. 3 ein Steuerungs- und Datenübertragungssystem 310 zum Übertragen von sicherheitsbezogenen Daten über ein Kommunikationsmedium 330. Es weist mehrere sichere Signaleinheiten 340, 360 und 380 auf, die jeweils über wenigstens einen Ausgang 341, 346, 361, 366 bzw. 381, 386 und/oder wenigstens einen Eingang 345, 365 bzw. 385 mit einem sicherheitskritischen Prozess oder jeweils einem Teilprozess 432, 434 bzw. 436 verbunden sind. An ein Kommunikationsmedium 330 sind die sicheren Signaleinheiten 340, 360, 380 und eine zentrale Einrichtung 320, 420 angeschaltet. Die sicheren Signaleinheiten 340, 360, 380 weisen jeweils eine Sicherheitseinrichtung 343, 363 bzw. 383 aufweisen und sind dazu ausgebildet, sicherheitsbezogene Daten bereitzustellen und diese Daten über das Kommunikationsmedium 330 zu übertragen. Vorzugsweise jede sichere Signaleinheit 340, 360, 380 ist dazu ausgebildet, ein definiertes Signal bereitzustellen und sowohl das definierte Signal als auch die sicherheitsbezogenen Daten zur zentralen Einrichtung 320, 420 zu übertragen. Die zentrale Einrichtung 320, 420 ist dazu ausgebildet, nur das definierte Signal auszuwerten und in Abhängigkeit von dem ausgewerteten definierten Signal einen zentralen Steuerbefehl zu erzeugen und den zentralen Steuerbefehl zusammen mit den sicherheitsbezogenen Daten zu wenigstens einer vorbestimmten sicheren Signaleinheit der mehreren sicheren Signaleinheiten 340, 360, 380 zu übertragen. Die wenigstens eine sichere Signaleinheit 340, 360, 380 ist dazu ausgebildet, die sicherheitsbezogenen Daten und den zentralen Steuerbefehl auszuwerten, um wenigstens einen Teil des sicherheitskritischen Prozesses 430, vorzugsweise jeweils einen Teilprozess 432, 434, 436 zu steuern.

Die zentrale Einrichtung 320 kann eine überlagerte Steuereinrichtung sein, welche zum Steuern der Kommunikation auf dem Kommunikationsmedium 330 und der nicht sicheren Signaleinheit 400 ausgebildet ist.

Das definierte Signal kann ein Abschaltbefehl in Form einer logischen Null sein.

Die Sicherheitseinrichtungen 343, 363 und 383 sind vorzugsweise dazu ausgebildet sind, sicherheitsbezogene Daten nicht auszuwerten und/oder nicht zu verarbeiten, wenn der empfangene zentrale Steuerbefehl ein Abschaltbefehl ist. Dies kann dadurch erreicht werden, dass die Steuer- und Auswerteinrichtungen 342, 362 und 382 vorzugsweise dazu ausgebildet sind, bei Empfang einer logischen Null die jeweilige Sicherheitseinrichtung 343, 363 bzw. 383 zu veranlassen, die empfangenen sicherheitsbezogenen Daten auszuwerten und/oder nicht zu verarbeiten.

Die zentrale Einrichtung 320, 420 kann dazu ausgebildet sein, bei Empfang eines unverfälschten definierten Signals einen zentralen Steuerbefehl zu erzeugen, der keine Abschaltung des sicherheitskritischen Prozesses 432, 434, 436 oder eines Teils des sicherheitskritischen Prozesses auslöst, und wobei die zentrale Einrichtung 320, 420 ferner dazu ausgebildet sein kann, bei Empfang eines verfälschten definierten Signals einen zentralen Steuerbefehl zu erzeugen, der eine Abschaltung des sicherheitskritischen Prozesses oder eines Teils des sicherheitskritischen Prozesses auslöst.

Die zentrale Einrichtung 320, 420 kann ferner dazu ausgebildet sein, unter Ansprechen auf ein vorbestimmtes Ereignis das empfangene definierte Signal nicht zu verändern.

Die zentrale Einrichtung 320, 420 kann dazu ausgebildet sein ist, den zentralen Steuerbefehl unter Verwendung einer Gruppenadresse zu einer vorbestimmte Gruppe der sicheren Signaleinheiten oder zu allen sicheren Signaleinheiten 340, 360, 380 und/oder gegebenenfalls zu einer oder mehreren nicht sicheren Signaleinheiten 400 zu übertragen.

Die sicheren Signaleinheiten 340, 360, 380 können jeweils dazu ausgebildet sein, aus dem definierten Signal ein sicherheitsbezogenes definiertes Signal zu erzeugen.

Damit die sicheren Signaleinheiten 340, 360 und 380 erkennen können, dass die zweiten sicherheitsbezogenen Daten von der zentralen Einrichtung 320, 420 kommen und korrekt übertragen worden sind, kann die zentrale Einrichtung 320, 420 dazu ausgebildet sein, dynamische Daten in definierter Weise bereitzustellen und zu der wenigstens einen sicheren Signaleinheit zu übertragen. Die wenigstens eine sichere Signaleinheit ist dementsprechend dazu ausgebildet, die dynamischen Daten auszuwerten. Bei den dynamischen Daten kann es sich um toggelnde Informationen oder um eine laufende Nummer handeln.

Alternativ kann die wenigstens eine sichere Signaleinheit dazu ausgebildet sein, dynamische Daten zu erzeugen und zur zentralen Einrichtung 320, 420 zu übertragen. Die zentrale Einrichtung 320, 420 kann dementsprechend dazu ausgebildet sein, die empfangenen dynamischen Daten gezielt, d.h. in definierter Weise zu verändern und zu der wenigstens einen sicheren Signaleinheit zu übertragen.

Die wenigstens eine sichere Signaleinheit kann dazu ausgebildet sein, unter Ansprechen auf undefiniert geänderte dynamische Daten den jeweiligen sicherheitskritischen Prozess sofort abzuschalten oder diesen in einen definierten, sicheren Zustand zu überführen.

Das Kommunikationsmedium 330 kann ein Feldbus, insbesondere ein Interbus basierter Feldbus und/oder ein Ethernet-System sein.

Das voreingestellte, definierte Signal kann ein Einbit-Wort, insbesondere eine logische Null ist, und der zentrale Steuerbefehl ebenfalls ein Einbit-Wort sein.

## Patentansprüche

1. Steuerungs- und Datenübertragungssystem (310) zum Übertragen von sicherheitsbezogenen Daten über ein Kommunikationsmedium (330) aufweisend:
- mehrere sichere Signaleinheiten (340, 360, 380), die jeweils über wenigstens einen Ausgang (341, 346; 361, 366; 381, 386) und/oder wenigstens einen Eingang (345; 365; 385) mit einem sicherheitskritischen Prozess (432, 434; 436) verbunden sind,
- ein Kommunikationsmedium (330), an welches die sicheren Signaleinheiten (340, 360, 380) angeschaltet sind, und
- eine zentrale Einrichtung (320; 420), die an das Kommunikationsmedium (330) angeschlossen ist, wobei die sicheren Signaleinheiten (340, 360, 380) jeweils eine Sicherheitseinrichtung (343; 363; 383) aufweisen und jeweils dazu ausgebildet sind, sicherheitsbezogene Daten bereitzustellen und diese Daten in einem ersten Teilfeld (442; 453₁) eines jeweiligen Telegramms oder Summenrahmens über das Kommunikationsmedium (330) zu übertragen,
**dadurch gekennzeichnet, dass**
jede sichere Signaleinheit (340, 360, 380) dazu ausgebildet ist, ein definiertes Signal, welches ein fehlerfreies Steuerungs- und Datenübertragungssystem (310) anzeigt oder anzeigt, dass keine Sicherheitsfunktion ausgelöst worden ist, bereitzustellen und das definierte Signal in ein zweites Teilfeld (443; 453₂) des jeweiligen Telegramms oder Summenrahmens zu schreiben und sowohl das definierte Signal als auch die sicherheitsbezogenen Daten zur zentralen Einrichtung (320; 420) zu übertragen, dass
die zentrale Einrichtung (320; 420) dazu ausgebildet ist, nur das zweite Teilfeld des jeweiligen Telegramms oder Summenrahmens auszulesen und auszuwerten und in Abhängigkeit von dem ausgewerteten definierten Signal einen zentralen Steuerbefehl zu erzeugen und den zentralen Steuerbefehl zusammen mit den sicherheitsbezogenen Daten zu wenigstens einer vorbestimmten sicheren Signaleinheit der mehreren sicheren Signaleinheiten (340, 360, 380) zu übertragen, und dass
die wenigstens eine sichere Signaleinheit (340, 360, 380) dazu ausgebildet ist, die sicherheitsbezogenen Daten und den zentralen Steuerbefehl auszuwerten, um wenigstens einen Teil des sicherheitskritischen Prozesses (432, 434, 436) zu steuern.

2. Steuerungs- und Datenübertragungssystem nach Anspruch 1,
**dadurch gekennzeichnet, dass**
die zentrale Einrichtung (320) eine überlagerte Steuereinrichtung ist, welche zum Steuern der Kommunikation auf dem Kommunikationsmedium (330) ausgebildet ist.

3. Steuerungs- und Datenübertragungssystem nach einem der Ansprüche 1 bis 2,
**dadurch gekennzeichnet, dass**
die zentrale Einrichtung (320; 420) dazu ausgebildet ist, bei Empfang eines unverfälschten definierten Signals einen zentralen Steuerbefehl zu erzeugen, der keine Abschaltung des sicherheitskritischen Prozesses (432, 434, 436) oder eines Teils des sicherheitskritischen Prozesses auslöst, und wobei die zentrale Einrichtung (320; 420) ferner dazu ausgebildet ist, bei Empfang eines verfälschten definierten Signals einen zentralen Steuerbefehl zu erzeugen, der eine Abschaltung des sicherheitskritischen Prozesses (432, 434, 436) oder eines Teils des sicherheitskritischen Prozesses auslöst.

4. Steuer- und Datenübertragungssystem nach Anspruch 3,
**dadurch gekennzeichnet, dass**
die zentrale Einrichtung (320; 420) dazu ausgebildet ist, unter Ansprechen auf ein vorbestimmtes Ereignis das empfangene definierte Signal nicht zu verändern.

5. Steuer- und Datenübertragungssystem nach einem der Ansprüche 3 oder 4,
**dadurch gekennzeichnet, dass**
die Sicherheitseinrichtungen (343, 363, 383) dazu ausgebildet sind, sicherheitsbezogene Daten nicht auszuwerten und/oder nicht zu verarbeiten, wenn der empfangene zentrale Steuerbefehl ein Abschaltbefehl ist.

6. Steuerungs- und Datenübertragungssystem nach einem der Ansprüche 1 bis 5,
**dadurch gekennzeichnet, dass**
die zentrale Einrichtung (320; 420) dazu ausgebildet ist, den zentralen Steuerbefehl unter Verwendung einer Gruppenadresse zu einer vorbestimmte Gruppe der sicheren Signaleinheiten oder zu allen sicheren Signaleinheiten (340, 360, 380) zu übertragen.

7. Steuerungs- und Datenübertragungssystem nach einem der Ansprüche 1 bis 6,
**gekennzeichnet durch**
eine nicht sichere Signaleinheit (400), die an das Kommunikationsmedium (330) angeschlossen und mit einem nicht sicherheitskritischen Prozess (438) oder nicht sicherheitskritischen Teilprozess verbunden ist, wobei
die zentrale Einrichtung (320; 420) dazu ausgebildet ist, den zentralen Steuerbefehl unter Verwendung einer Gruppenadresse zu allen sicheren Signaleinheiten (340, 360, 380) und der nicht sicheren Signaleinheit (400) zu übertragen.

8. Steuerungs- und Datenübertragungssystem nach einem der Ansprüche 1 bis 7,
**dadurch gekennzeichnet, dass**
die sicheren Signaleinheiten (340, 360, 380) jeweils dazu ausgebildet sind, aus dem definierten Signal ein sicherheitsbezogenes definiertes Signal zu erzeugen.

9. Steuerungs- und Datenübertragungssystem nach einem der Ansprüche 1 bis 8,
**dadurch gekennzeichnet, dass**
die zentrale Einrichtung (320; 420) dazu ausgebildet ist, dynamische Daten bereitzustellen und zu wenigstens einer sicheren Signaleinheit (340, 360, 380) zu übertragen, und dass die wenigstens eine sichere Signaleinheit (340, 360, 380) dazu ausgebildet ist, die dynamischen Daten auszuwerten.

10. Steuerungs- und Datenübertragungssystem nach einem der Ansprüche 1 bis 9,
**dadurch gekennzeichnet, dass** das Kommunikationsmedium (330) ein Feldbus, insbesondere ein Interbus basierter Feldbus und/oder ein Ethernet-System ist.

11. Steuerungs- und Datenübertragungssystem nach einem der Ansprüche 1 bis 10,
**dadurch gekennzeichnet, dass**
das definierte Signal ein Einbit-Wort, insbesondere eine logische Null ist, und dass
die zentrale Einrichtung (320; 420) dazu ausgebildet ist, bei Empfang eines unverfälschten definierten Signals einen zentralen Steuerbefehl zu erzeugen, der ein Einbit-Wort, insbesondere eine logische Eins ist.

## Claims

1. A control and data transmission system (310) for transmitting safety-related data via a communication medium (330), comprising:
- a plurality of safe signal units (340, 360, 380), each of which is connected to a safety-critical process (432, 434; 436) via at least one output (341, 346; 361, 366; 381, 386) and/or at least one input (345; 365; 385);
- a communication medium (330) to which the safe signal units (340, 360, 380) are connected; and
- a central device (320; 420) which is connected to the communication medium (330), wherein the safe signal units (340, 360, 380) each comprise a safety device (343; 363; 383) and each are adapted to provide safety-related data and to transmit these data in a first subfield (442; 453₁) of a respective telegram or sum frame via the communication medium (330);
**characterized in that**
each safe signal unit (340, 360, 380) is adapted to provide a defined signal which indicates an error-free control and data transmission system (310) or which indicates that no safety function has been triggered, and to write the defined signal into a second subfield (443; 453₂) of the respective telegram or sum frame, and to transmit both the defined signal and the safety-related data to the central device (320; 420); that the central device (320; 420) is adapted to read out and evaluate only the second subfield of the respective telegram or sum frame, and to generate a central control command in response to the evaluated defined signal, and to transmit the central control command together with the safety-related data to at least one predetermined safe signal unit of the plurality of safe signal units (340, 360, 380); and that
the at least one safe signal unit (340, 360, 380) is adapted to evaluate the safety-related data and the central control command for controlling at least part of the safety-critical process (432, 434, 436).

2. The control and data transmission system according to claim 1, **characterized in that**
the central device (320) is a higher level control device which is adapted to control the communication on the communication medium (330).

3. The control and data transmission system according to any of claims 1 to 2, **characterized in that**
the central device (320; 420) is adapted to generate, upon receipt of a non-corrupted defined signal, a central control command that does not trigger any shut-off of the safety-critical process (432, 434, 436) or part of the safety-critical process; and wherein the central device (320; 420) is further adapted to generate, upon receipt of a corrupted defined signal, a central control command that triggers a shut-off of the safety-critical process (432, 434, 436) or part of the safety-critical process.

4. The control and data transmission system according to claim 3, **characterized in that**
the central device (320; 420) is adapted to not modify the received defined signal in response to a predetermined event.

5. The control and data transmission system according to any of claims 3 or 4, **characterized in that** the safety devices (343, 363, 383) are adapted to not evaluate and/or not process safety-related data, if the received central control command is a shut-off command.

6. The control and data transmission system according to any of claims 1 to 5, **characterized in that**
the central device (320; 420) is adapted to transmit the central control command to a predetermined group of the safe signal units or to all of the safe signal units (340, 360, 380) using a group address.

7. The control and data transmission system according to any of claims 1 to 6, **characterized by**
a non-safe signal unit (400) which is connected to the communication medium (330) and is connected to a not safety-critical process (438) or to a not safety-critical sub-process, wherein
the central device (320; 420) is adapted to transmit the central control command to all of the safe signal units (340, 360, 380) and to the non-safe signal unit (400) using a group address.

8. The control and data transmission system according to any of claims 1 to 7, **characterized in that**
the safe signal units (340, 360, 380) are each adapted to generate, from the defined signal, a safety-related defined signal.

9. The control and data transmission system according to any of claims 1 to 8, **characterized in that**
the central device (320; 420) is adapted to provide dynamic data and to transmit them to at least one safe signal unit (340, 360, 380); and that the at least one safe signal unit (340, 360, 380) is adapted to evaluate the dynamic data.

10. The control and data transmission system according to any of claims 1 to 9, **characterized in that**
the communication medium (330) is a field bus, in particular an Interbus-based field bus, and/or an Ethernet system.

11. The control and data transmission system according to any of claims 1 to 10, **characterized in that**
the defined signal is a one-bit word, in particular a logical zero; and that
the central device (320; 420) is adapted to generate, upon receipt of a non-corrupted defined signal, a central control command which is a one-bit word, in particular a logical one.

## Revendications

1. Système de commande et de transmission de données (310) pour la transmission de données relatives à la sécurité via un support de communication (330), comprenant :
- plusieurs unités de signal sécurisées (340, 360, 380), reliées chacune par au moins une sortie (341, 346 ; 361, 366 ; 381, 386) et/ou au moins une entrée (345 ; 365 ; 385) à un processus critique en matière de sécurité (432, 434 ; 436),
- un support de communication (330) auquel sont connectées les unités de signal sécurisées (340, 360, 380), et
- un dispositif central (320 ; 420) relié au support de communication (330), les unités de signal sécurisées (340, 360, 380) présentant chacune un dispositif de sécurité (343 ; 363 ; 383) et étant prévues pour préparer chacune des données relatives à la sécurité et transmettre lesdites données dans un premier champ partiel (442 ; 453₁) d'un télégramme ou d'une trame de somme respectifs par l'intermédiaire du support de communication (330),
**caractérisé en ce que** :
chaque unité de signal sécurisée (340, 360, 380) est prévue pour préparer un signal défini indiquant un système de commande et de transmission de données (310) sans erreur, ou indiquant qu'aucune fonction de sécurité n'été activée, et pour écrire le signal défini dans un second champ partiel (443 ; 453₂) du télégramme ou de la trame de somme respectifs et transmettre au dispositif central (320 ; 420) le signal défini ainsi que les données relatives à la sécurité, **en ce que**
le dispositif central (320 ; 420) est prévu pour ne lire et n'évaluer que le second champ partiel du télégramme ou de la trame de somme respectifs et générer une instruction de commande centrale en fonction du signal défini évalué et transmettre l'instruction de commande centrale conjointement avec les données relatives à la sécurité à au moins une unité de signal sécurisée prédéterminée parmi les plusieurs unités de signal sécurisées (340, 360, 380), et
**en ce que** ladite au moins une unité de signal sécurisée (340, 360, 380) est prévue pour évaluer les données relatives à la sécurité et l'instruction de commande centrale, afin de commander au moins une partie du processus critique en matière de sécurité (432, 434, 436).

2. Système de commande et de transmission de données selon la revendication 1, **caractérisé en ce que** :
le dispositif central (320) est un dispositif de commande supérieur prévu pour la commande de la communication sur le support de communication (330).

3. Système de commande et de transmission de données selon la revendication 1 ou 2, **caractérisé en ce que** :
le dispositif central (320 ; 420) est prévu pour générer une instruction de commande centrale à la réception d'un signal défini non falsifié, laquelle ne déclenche aucun arrêt du processus critique en matière de sécurité (432, 434, 436) ou d'une partie du processus critique en matière de sécurité, et **en ce que** le dispositif central (320 ; 420) est en outre prévu pour générer une instruction de commande centrale à la réception d'un signal défini falsifié, laquelle déclenche un arrêt du processus critique en matière de sécurité (432, 434, 436) ou d'une partie du processus critique en matière de sécurité.

4. Système de commande et de transmission de données selon la revendication 3, **caractérisé en ce que** :
le dispositif central (320 ; 420) est prévu pour ne pas modifier le signal défini reçu en réaction à un événement prédéterminé.

5. Système de commande et de transmission de données selon la revendication 3 ou 4, **caractérisé en ce que** :
les dispositifs de sécurité (343, 363, 383) sont prévus pour ne pas évaluer et/ou ne pas traiter les données relatives à la sécurité si l'instruction de commande centrale reçue est une instruction d'arrêt.

6. Système de commande et de transmission de données selon l'une des revendications 1 à 5, **caractérisé en ce que** :
le dispositif central (320 ; 420) est prévu pour transmettre l'instruction de commande centrale au moyen d'une adresse de groupe, à un groupe prédéterminé des unités de signal sécurisées ou à toutes les unités de signal sécurisées (340, 360, 380).

7. Système de commande et de transmission de données selon l'une des revendications 1 à 6, **caractérisé par** :
une unité de signal non sécurisée (400) reliée au support de communication (330) et connectée à un processus non critique en matière de sécurité (438) ou à un processus partiel non critique en matière de sécurité,
le dispositif central (320 ; 420) étant prévu pour transmettre l'instruction de commande centrale au moyen d'une adresse de groupe à toutes les unités de signal sécurisées (340, 360, 380) et à l'unité de signal non sécurisée (400).

8. Système de commande et de transmission de données selon l'une des revendications 1 à 7, **caractérisé en ce que** :
les unités de signal sécurisées (340, 360, 380) sont prévues chacune pour générer, à partir du signal défini, un signal défini relatif à la sécurité.

9. Système de commande et de transmission de données selon l'une des revendications 1 à 8, **caractérisé en ce que** :
le dispositif central (320 ; 420) est prévu pour préparer des données dynamiques et transmettre celles-ci à au moins une unité de signal sécurisée (340, 360, 380), et
**en ce que** ladite au moins une unité de signal sécurisée (340, 360, 380) est prévue pour évaluer les données dynamiques.

10. Système de commande et de transmission de données selon l'une des revendications 1 à 9, **caractérisé en ce que** :
le support de communication (330) est un bus de terrain, en particulier un bus de terrain basé sur Interbus et/ou un système Ethernet.

11. Système de commande et de transmission de données selon l'une des revendications 1 à 10, **caractérisé en ce que** :
le signal défini est un mot de un bit, en particulier un zéro logique, et
**en ce que** le dispositif central (320 ; 420) est prévu pour générer une instruction de commande centrale à la réception d'un signal défini non falsifié, laquelle est un mot de un bit, en particulier un un logique.
